# EUROPEAN PATENT SPECIFICATION

(11) **EP 4 145 669 B1**
(45) Date of publication and mention of the grant of the patent: **19.03.2025**
(21) Application number: 22758109.7
(22) Date of filing: 20.04.2022
(51) Int. Cl.: H02J 7/00, G06F 1/16

(54) **CHARGING/DISCHARGING CIRCUIT AND ELECTRONIC DEVICE**
LADE-/ENTLADESCHALTUNG UND ELEKTRONISCHE VORRICHTUNG
CIRCUIT DE CHARGE/DÉCHARGE ET DISPOSITIF ÉLECTRONIQUE

(30) Priority: 21.07.2021 CN 202110828090
(43) Date of publication of application: 08.03.2023
(73) Proprietor: Honor Device Co., Ltd., Shenzhen, Guangdong 518040 (CN)
(72) Inventor: QIU, Yupeng, Shenzhen, Guangdong 518040 (CN); ZHOU, Haibin, Shenzhen, Guangdong 518040 (CN); HE, Zhongyong, Shenzhen, Guangdong 518040 (CN); LI, Peng, Shenzhen, Guangdong 518040 (CN)
(74) Representative: Epping - Hermann - Fischer
(86) International application number: PCT/CN2022/087903
(87) International publication number: WO 2023/000732

(56) References cited:
- EP-A1- 3 629 441
- CN-A- 112 467 811
- CN-U- 206 908 792
- CN-U- 207 218 343
- US-A1- 2020 036 198
- US-B2- 9 853 465

## Description

### TECHNICAL FIELD

This application relates to the field of circuit design, and in particular, to a charging/discharging circuit that can charge and discharge a battery, and an electronic device.

### BACKGROUND

In a process of charging a terminal product, the charged product (for example, a mobile phone) usually uses dual batteries, and the dual batteries are usually connected in parallel to a charger, for example, connected in parallel to an output end of a BUCK charger (BUCK charger), and a voltage of the output end is Vbat. The BUCK charger is used for path management in charging and discharging. An isolation device (that is, a path impedance device) impedance between the dual batteries and a path cabling impedance between the dual batteries are relatively high.

For example, a path cabling impedance of a foldable phone product is usually relatively high, resulting in a relatively high bias current when the dual batteries are charged or discharged. That is, there is a relatively large difference between a current Ibat1 flowing into one battery and a current Ibat2 flowing into the other battery. Therefore, when the dual batteries are charged, one battery is fully charged, but the other battery is not fully charged; or when the dual batteries are discharged, one battery is fully discharged, but the other battery is not fully discharged. As a result, utilization of power of the dual batteries is relatively low.

US 2020/036198 A1 relates to an electronic device comprising a housing having a first housing structure and a second housing structure, wherein the first and second housing structures are foldable with respect to each other about a hinge axis; a processor disposed in the housing; a first battery disposed in the first housing structure; a second battery disposed in the second housing; a flexible printed circuit board (FPCB) extending from the first housing structure to the second housing structure and crossing the hinge axis; a power management integrated circuit (PMIC) disposed in the first housing structure and electrically connected to the processor and the FPCB; a first charging control circuit disposed in the first housing structure and electrically connected to the power management integrated circuit, the processor, the first battery, and the FPCB; and a second charging control circuit disposed in the second housing structure and electrically connected to the power management integrated circuit, the processor, the second battery, and the FPCB.

EP 3 629 441 A1 relates to a system comprising a primary side comprising a charger and a first battery, the first battery to provide power to the primary side; a secondary side comprising a second battery, the second battery to provide power to the secondary side; and hinge resistance between the primary side and the secondary side; wherein the charger is to charge the first battery and the second battery; and wherein the primary side includes a feedback controlled active device in a current path of the first battery that compensates for one or more of the hinge resistance, connector resistances, or battery impedances in a current path of the second battery.

### SUMMARY

An embodiment of this application provides a charging/discharging circuit. The circuit can equalize charging rates of batteries in a battery pack, so that charging depths of the batteries are the same, thereby preventing a case that one battery is fully charged, but the other battery is not fully charged.

The invention is set out in the appended claims. Specifically, the embodiments of this application disclose the following technical solutions:
According to a first aspect, this embodiment of this application provides a charging/discharging circuit configured to charge and discharge a battery packThe circuit includes a processing module, a first charging circuit, a first switch, a second switch, and an impedance.. The battery pack includes a first battery and a second battery, and the first battery and the second battery are connected in parallel by the impedance. The impedance includes a path cabling impedance and a path device impedance. The first switch and the second switch are separately connected to the processing module, a first port of the first charging circuit, and the battery pack.

The first charging circuit is configured to output a voltage by using the first port. The voltage passes through the first switch, the second switch, and the impedance for charging the battery pack. The first switch and the second switch are separately connected to a charging line of at least one battery in the battery pack.

The processing module is configured to obtain a voltage and/or a current of the charging line of each battery in the battery pack, and control, based on the voltage and/or the current, the first switch and the second switch to be turned on or turned off, so that batteries in the battery pack are charged equally.

In the charging/discharging circuit provided in this aspect, the processing module obtains the charging voltage and/or the current of a battery on each charging line, and controls, based on the voltage and/or the current, the first switch and the second switch to be turned on or turned off alternately, so that a voltage difference between two batteries does not exceed a specific threshold, thereby ensuring that the batteries in the battery pack can be fully charged simultaneously, and preventing a case that one battery is fully charged, but the other battery is not fully charged.

In addition, this method improves discharging efficiency of the battery pack. Charging rates or discharging rates of the two batteries are equalized by switching between the first switch and the second switch, so that charging depths of the batteries are the same, and charging efficiency is improved.

Charging lines of the batteries in the battery pack include a first charging line and a second charging line, the first charging line passes through the first switch for charging the battery pack, and the second charging line passes through the second switch for charging the battery pack. The processing module is further configured to: in a process in which the first charging line charges the battery pack, control the first switch to be turned on and the second switch to be turned off, or control the first switch to be turned off and the second switch to be turned on, so that a voltage difference between a charging voltage of the first battery and a charging voltage of the second battery is less than or equal to a first threshold.

In this implementation, when the voltage difference between the two rechargeable batteries in the battery pack exceeds the first threshold, a status of the first switch and a status of the second switch is switched, and a charging rate of each branch is adjusted by using the path cabling impedance and the path device impedance, so that a charging rate of a battery line with a high charging voltage is decreased, and a charging rate of a battery line with a low charging voltage is increased, thereby achieving equalization of the charging rates of the dual batteries.

With reference to the first aspect, in a possible implementation of the first aspect, the circuit further includes a second charging circuit, and the second charging circuit is connected to both the processing module and the battery pack. The processing module is further configured to switch between the first charging circuit and the second charging circuit when detecting that the voltage and/or the current of the charging line of each battery in the battery pack meet/meets a preset condition. When the charging circuit is switched to the second charging circuit, the second charging circuit provides a fast charging service for the battery pack.

In this aspect, the second charging circuit is added in the circuit. When the charging circuit is switched to the second charging circuit for charging the battery pack, because the second charging circuit can provide the fast charging service for the battery pack, the charging efficiency of the battery pack is improved.

Optionally, the first charging circuit is a BUCK charger.

Optionally, the second charging circuit is an SC charger. The SC charger includes a first SC charger and a second SC charger.

With reference to the first aspect, in another possible implementation of the first aspect, the second charging circuit includes a third switch and a fourth switch, and the third switch and the fourth switch are separately connected to at least one charging line of the battery pack. The processing module is further configured to: in a process in which the second charging circuit charges the battery pack, control the third switch and/or the fourth switch to be turned on or turned off, so that the batteries in the battery pack are charged equally.

Similar to a control manner of the first switch and the second switch, in this embodiment, the second charging circuit is controlled to charge the battery pack by using different lines by turning on or turning off the third switch and the fourth switch, so that the voltage difference between the two batteries does not exceed a specific threshold, thereby ensuring that the batteries in the battery pack are charged equally.

With reference to the first aspect, in still another possible implementation of the first aspect, the circuit further includes a collection circuit, and the collection circuit is connected to both the battery pack and the processing module. The collection circuit is configured to collect the voltage and/or the current of the charging line of each battery in the battery pack, and report the voltage and/or the current to the processing module. The processing module is further configured to receive the voltage and/or the current reported by the collection circuit.

With reference to the first aspect, in still another possible implementation of the first aspect, that the processing module is further configured to switch between the first charging circuit and the second charging circuit when detecting that the voltage and/or the current of the charging line of each battery in the battery pack meet/meets a preset condition includes:
The processing module is further configured to: when detecting that the voltage and/or the current in the battery pack meet/meets a first preset condition, control the first charging circuit to be switched to the second charging circuit, where the first preset condition is that the charging voltage of the first battery reaches a second threshold, and the charging voltage of the second battery reaches the second threshold.

Further, that the processing module controls the first charging circuit to be switched to the second charging circuit includes: the processing module controls the third switch to be turned on and the fourth switch to be turned on.

The second threshold can be set freely.

With reference to the first aspect, in still another possible implementation of the first aspect, in a process in which the second charging circuit charges the battery pack, the second charging circuit charges the battery pack by using a third charging line and a fourth charging line.

The processing module is further configured to control the third switch to be turned on and the fourth switch to be turned off, or control the third switch to be turned off and the fourth switch to be turned on, so that the voltage difference between the charging voltage of the first battery and the charging voltage of the second battery is less than or equal to a third threshold.

In this implementation, the third switch and the fourth switch are used to control the voltage and/or the current of the two charging circuits in the battery pack, and the charging rate of each branch is adjusted by using the path cabling impedance and the path device impedance, so that a charging rate of a battery line with a high charging voltage is decreased, and a charging rate of a battery line with a low charging voltage is increased, thereby achieving equalization of the charging rates of the dual batteries.

With reference to the first aspect, in still another possible implementation of the first aspect, that the processing module is further configured to switch between the first charging circuit and the second charging circuit when detecting that the voltage and/or the current of the charging line of each battery in the battery pack meet/meets a preset condition includes:
The processing module is further configured to: when detecting that the voltage and/or the current in the battery pack meet/meets a second preset condition, control the second charging circuit to be switched to the first charging circuit, where the second preset condition is that the charging voltage of the first battery reaches a fourth threshold, and the charging voltage of the second battery reaches the fourth threshold.

In this implementation, when it is detected that the battery in the battery pack is about to be fully charged, the charging circuit is switched to the first charging circuit to continue charging, so as to implement accurate control and adjustment on the voltage/current of each charging branch in the battery pack.

With reference to the first aspect, in still another possible implementation of the first aspect, that the processing module controls the second charging circuit to be switched to the first charging circuit includes: the processing module controls the first switch to be turned on and the second switch to be turned off, or controls both the first switch and the second switch to be turned on. With reference to the first aspect, in still another possible implementation of the first aspect, the processing module is further configured to: when detecting that a charging current of at least one of the first charging line or the second charging line reaches a cutoff current of a battery, disconnect a current charging line from the first charging circuit, and stop charging the battery that reaches the cutoff current.

In this implementation, when it is detected that a battery in one battery branch in the battery pack is fully charged, that is, when a charging current reaches the cutoff current Icutoff, the branch is disconnected from a charger, and charging of the battery in the branch is stopped.

With reference to the first aspect, in still another possible implementation of the first aspect, that the processing module disconnects the current charging line from the first charging circuit, and stops charging of the battery that reaches the cutoff current includes: the processing module controls the status of the first switch to be changed from being turned on to being turned off, and the status of the second switch to be changed from being turned off to being turned on.

With reference to the first aspect, in still another possible implementation of the first aspect, the circuit further includes a power circuit, the first charging circuit includes a second port, and the second port is used to connect to the power circuit.

The processing module is further configured to: after the battery pack is charged completely, control the second port of the first charging circuit to be connected to the power circuit, so that the battery pack is discharged.

Optionally, the power circuit includes at least one of a PMIC or an SoC.

With reference to the first aspect, in still another possible implementation of the first aspect, the processing module is further configured to: in a discharging process of the battery pack, control the first switch to be turned on and the second switch to be turned off, or control the first switch to be turned off and the second switch to be turned on, so that a voltage difference between a discharging voltage of the first battery and a discharging voltage of the second battery is less than or equal to a fifth threshold.

In this embodiment, a circuit discharging method is further provided. When the battery pack is fully charged, the battery pack is connected to the power circuit by using the second port of the first charging circuit, so as to implement discharging to the power circuit. In addition, in the discharging process of the battery pack, the voltage difference between the discharging voltage of the first battery and the discharging voltage of the second battery is adjusted by controlling the first switch and the second switch to be turned on or turned off, so that the voltage difference between the two batteries does not exceed a specific threshold, for example, a fifth threshold, so as to ensure equalization of discharging rates of the two batteries.

With reference to the first aspect, in still another possible implementation of the first aspect, the processing module is further configured to: when detecting that the discharging voltage of the first battery reaches a first power-off voltage, and/or the discharging voltage of the second battery reaches a second power-off voltage, disconnect the power circuit from the battery pack. According to a second aspect, an embodiment of this application further provides an electronic device, where the electronic device includes a charging/discharging circuit and a battery pack, and the charging/discharging circuit is configured to charge and discharge the battery pack. The charging/discharging circuit is the charging/discharging circuit according to any one of the first aspect or the implementations of the first aspect.

Optionally, with reference to the second aspect, in a possible implementation of the second aspect, the charging/discharging circuit further includes a power circuit, where the power circuit is connected to a processing module of the charging/discharging circuit by using a first charging circuit, and is configured to consume power of the battery pack, so that the battery pack is discharged.

Optionally, the power circuit includes at least one of a PMIC or an SoC.

With reference to the second aspect, in another possible implementation of the second aspect, a collection circuit is further included, where the collection circuit is disposed in the charging/discharging circuit, or is disposed on a terminal device outside the charging/discharging circuit; and the collection circuit is configured to collect a voltage and/or a current of a charging line of each battery in the battery pack, and report the voltage and/or the current to the processing module.

In addition, the electronic device further includes a processor and a memory, where the processor may integrate the processing module according to the first aspect, or may be a part of the processing module, and is configured to implement all or some functions of the foregoing processing module.

The memory is configured to store data and/or computer program instructions, and the data may be all the foregoing thresholds, preset conditions, and the like. When the computer program instructions in the memory are executed by the processor, the foregoing method for charging and discharging the battery pack can be implemented.

Optionally, the memory includes but is not limited to a read only memory ROM or a random access memory RAM.

### BRIEF DESCRIPTION OF DRAWINGS

FIG. 1 is a schematic diagram of a charging/discharging circuit according to an embodiment of this application;
FIG. 2 is a schematic diagram of a charging/discharging circuit including a BUCK charger according to an embodiment of this application;
FIG. 3 is a schematic diagram of a charging/discharging circuit including two charging circuits according to an embodiment of this application;
FIG. 4a is a schematic diagram of a circuit for charging a battery pack by using a BUCK charger according to an embodiment of this application;
FIG. 4b is a schematic diagram of a circuit for discharging a battery pack by using a BUCK charger according to an embodiment of this application;
FIG. 5a is a schematic diagram of charging, by a BUCK charger, a battery pack by using a first charging line according to an embodiment of this application;
FIG. 5b is a schematic diagram of charging, by a BUCK charger, a battery pack by using a second charging line according to an embodiment of this application;
FIG. 6a is a schematic diagram of charging, by an SC charger, a battery pack by using a third charging line according to an embodiment of this application;
FIG. 6b is a schematic diagram of charging, by an SC charger, a battery pack by using a fourth charging line according to an embodiment of this application;
FIG. 7A and FIG. 7B are a flowchart of a method for charging a battery pack according to an embodiment of this application;
FIG. 8 is a schematic diagram of a relationship between a charging voltage difference of two charging lines and a first threshold according to an embodiment of this application;
FIG. 9 is a flowchart of a method for discharging a battery pack according to an embodiment of this application;
FIG. 10a is a schematic diagram of discharging a battery pack by using a first discharging line according to an embodiment of this application;
FIG. 10b is a schematic diagram of discharging a battery pack by using a second discharging line according to an embodiment of this application; and
FIG. 11 is a sequence diagram of a charging and discharging process of a battery according to an embodiment of this application.

### DESCRIPTION OF EMBODIMENTS

To make a person skilled in the art better understand technical solutions in embodiments of this application, and make the foregoing objectives, features, and advantages of embodiments of this application more clear and easier to understand, the following further describes the technical solutions in embodiments of this application in detail with reference to accompanying drawings. Before the technical solutions in embodiments of this application are described, an application scenario of the embodiments of this application is first described with reference to the accompanying drawings.

The technical solutions in this application may be applied to a scenario in which an electronic product or an electronic device is charged or discharged. The electronic product may be an electronic product that uses a charging/discharging policy of parallel charging or parallel discharging by using dual batteries (or electrochemical cells), and the electronic product or the electronic device may be a terminal device.

Further, the terminal device may be a portable device, such as a smart terminal, a mobile phone, a notebook computer, a tablet computer, a personal computer (personal computer, PC), a personal digital assistant (personal digital assistant, PDA), a foldable terminal, a wearable device with a wireless communication function (such as a smartwatch or a band), a user device (user device) or user equipment (user equipment, UE), a game console, and an augmented reality (augmented reality, AR)/virtual reality (virtual reality, VR) device. A specific device form of the terminal device is not limited in the embodiments of this application. In addition, an Android (Android) system, an IOS (IOS) system, or a HarmonyOS (HarmonyOS) system is installed on the foregoing various terminal devices.

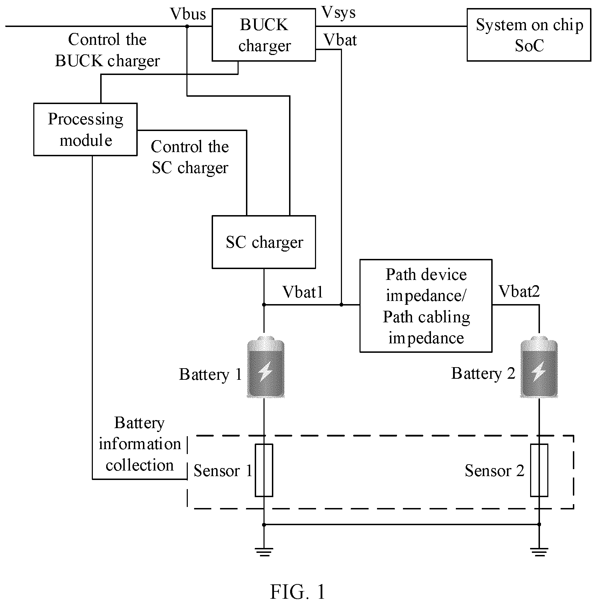

Before the technical solutions in this application is described, a common battery charging circuit is first described. FIG. 1 is a schematic diagram of a charging circuit according to an embodiment. The circuit includes two charging circuits that can charge a battery pack, a processing module configured to control switching between the two charging circuits, and components such as a battery pack and a sensor. In addition, a power circuit such as a system on chip (System on Chip, SoC) may be further included.

One of the two charging circuits is a common charger, and the other is a fast charger that can provide a fast charging service for a battery. The fast charger may be an SC charger (SC charger), where "SC" represents a switching capacitor (Switching Capacitor, SC). The common charger may be a BUCK charger (BUCK charger), where "BUCK" may be translated into voltage step-down. The two chargers are both connected to the processing module, and the processing module is configured to switch between the two chargers. In addition, the BUCK charger includes a switch configured to switch a circuit, and the switch is configured to switch the circuit between a system voltage (Vsys) or a battery voltage (Vbat).

The battery pack usually includes two batteries: a battery 1 and a battery 2. The battery pack is connected to the foregoing two charging circuits and the processing module. A cable between the battery 1 and the battery 2 and a cable between the battery pack and the charging circuits include an impedance, such as a path device impedance and/or a path cabling impedance. A value of the impedance may be set as required, for example, the impedance is usually 0-20 mΩ (milliohms). The sensor (sensor) may include a sensor 1 and a sensor 2, and is configured to collect a voltage and/or a current of each battery, and then report the charging/discharging voltage and current of each battery to the processing module. The sensor can collect the voltage and/or the current periodically or in real time. The processing module controls, based on the voltage and/or the current reported by the sensor, whether the two charging circuits charge or discharge the battery pack.

In the charging circuit shown in FIG. 1, when the BUCK charger is charging the battery pack, because of the path device impedance and/or the path cabling impedance between the battery 1 and the battery 2, a voltage division is caused. Especially in a branch of Vbat2, a path impedance voltage drop is generated, and consequently, voltages transmitted by the BUCK charger to the battery 1 and the battery 2 are different. In a line used to transmit a voltage to charge the battery 2, a part of impedance voltage drop exists, and consequently, a voltage Vbat2 reaching the battery 2 is less than a voltage Vbat1 transmitted to the battery 1, that is, Vbat2 is less than Vbat1. In this case, a voltage used by the BUCK charger to charge the battery 1 is higher than a voltage used by the BUCK charger to charge the battery 2. Therefore, the battery 1 will be fully charged first; and when the battery 1 is fully charged, the battery 2 is not fully charged. Assuming that the battery 1 and the battery 2 are of a same model and have a same capacity, at this time, it is externally displayed that the battery pack is fully charged, but the battery 2 is actually not fully charged, and there is still rechargeable space. As a result, the battery pack has relatively low utilization and a high aging speed.

To resolve the foregoing problem, an embodiment of this application provides a charging/discharging circuit. Based on an original circuit structure, a switching device is added to the circuit. Charging circuits of a battery pack are switched by using the switching device, so that the dual batteries are charged/discharged equally.

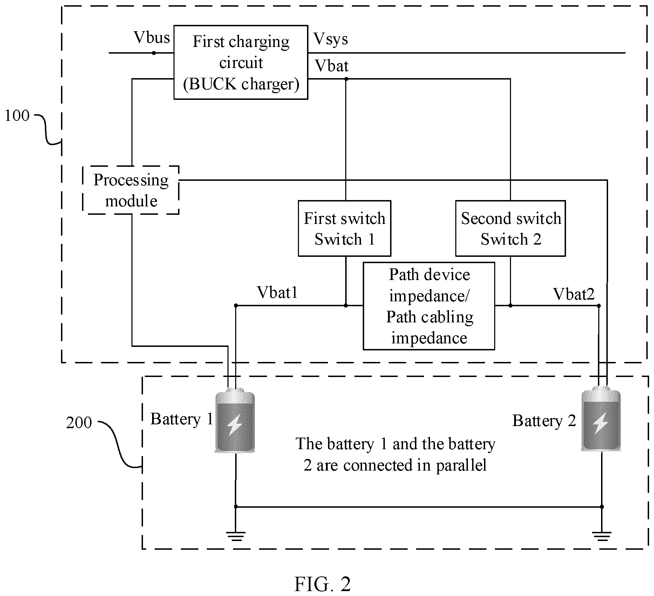

FIG. 2 is a diagram of a structure of a charging/discharging circuit according to an embodiment of this application. The charging/discharging circuit 100 is configured to charge and discharge a battery pack 200.

The circuit 100 includes a processing module, a first charging circuit, a first switch (Switch 1), a second switch (Switch 2), and an impedance, where the impedance includes a path device impedance and/or a path cabling impedance between the battery pack and the charging/discharging circuit. The path device impedance refers to an impedance included in a circuit device, and the path cabling impedance refers to an impedance of at least one power line, such as an impedance between two batteries in the battery pack, or an impedance between the battery pack and a transmission line of a charging/discharging line.

A value of the impedance is 10 mΩ-20 mΩ (milliohms), and a voltage drop generated by the impedance changes with a current. That is, the higher the current, the higher the voltage drop generated by the path impedance.

The first charging circuit is a step-down charging circuit (for example, a BUCK charger) configured to implement low-voltage trickle charging and constant voltage (Constant voltage, CV) low-current charging of the battery pack, as well as a path management function during discharging. The first charging circuit includes a first port and a second port. A voltage Vbat (Voltage of Battery) output by the first port is used to charge the battery pack, and a voltage Vsys (Voltage of System) output by the second port is used to supply power to a system or a power circuit. Therefore, the first port outputs a charging voltage Vbat, and the second port outputs a discharging voltage Vsys.

In addition, the first charging circuit may further include more ports such as a third port and a fourth port, and these ports may be configured to connect to the processing module and a main line. For example, the third port is connected to the processing module, the fourth port is connected to a trunk line, and Vbus represents a trunk line voltage.

In the circuit 100 shown in FIG. 2, the first port of the first charging circuit is connected to the battery pack by using the first switch and/or the second switch. The foregoing path device impedance and/or path cabling impedance exist/exists in a line that connects the first switch and the second switch to the battery pack.

Optionally, the first switch is also written as "switch 1", and the second switch is also written as "switch 2".

In addition, the battery pack 200 includes a first battery and a second battery, and the first battery and the second battery are connected in parallel. For convenience of description, in this embodiment, the first battery is referred to as "battery 1", and the second battery is referred to as "battery 2". The battery 1 and the battery 2 may be collectively referred to as "battery pack" or "dual batteries". It should be understood that the battery pack may further include more batteries such as a third battery and a fourth battery. This is not limited in this embodiment.

The first charging circuit is configured to output the voltage Vbat by using the first port. The voltage Vbat passes through the first switch, the second switch, and the impedance to charge the battery pack. The first switch and the second switch are separately connected to a charging line of at least one battery in the battery pack.

The processing module is connected to the first charging circuit, the battery pack, the first switch, and the second switch. The processing module is configured to obtain a voltage and/or a current of a charging line of each battery in the battery pack, and control, based on the voltage and/or the current, the first switch and the second switch to be turned on or turned off, so that the batteries in the battery pack are charged equally.

Optionally, the processing module may be a hardware module disposed in the charging/discharging circuit, or may be a software module disposed outside the charging/discharging circuit and integrated into a device or hardware of an external circuit, for example, integrated into a processor or a processing chip. A form and a disposed position of the processing module are not limited in this embodiment.

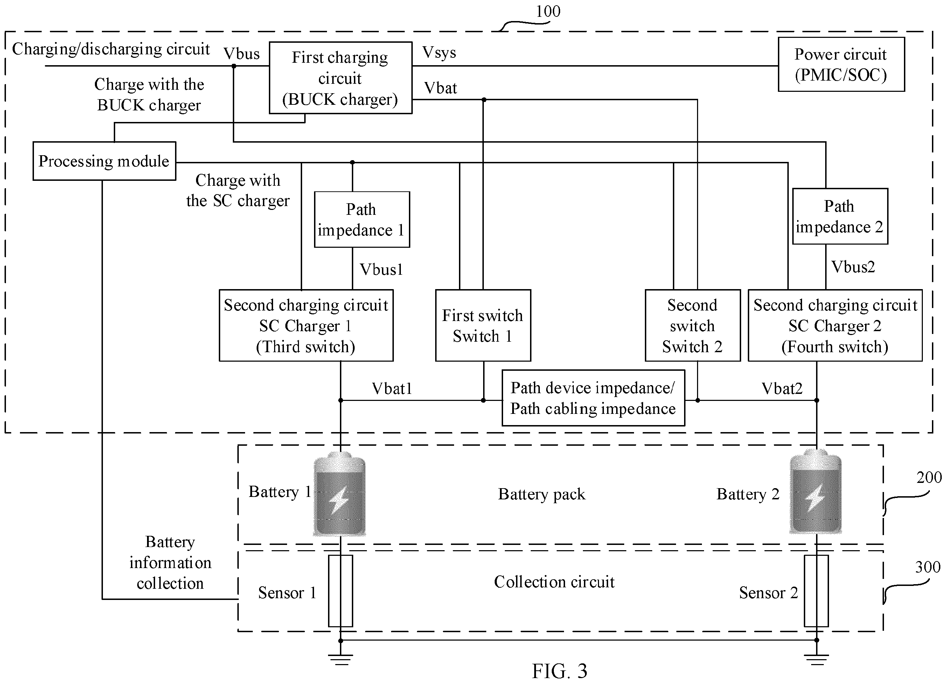

In addition, in a possible implementation, the foregoing circuit further includes a second charging circuit, as shown in FIG. 3. The second charging circuit is connected to both the processing module and the battery pack. The second charging circuit is configured to implement constant current (Constant Current, CC) high-current charging of the dual batteries, that is, to provide a fast charging service for the dual batteries. Further, the second charging circuit includes at least two switches, such as a third switch (Switch 3) and a fourth switch (Switch 4). The third switch and the fourth switch are configured to switch between different charging lines to charge the battery pack. In this embodiment, an internal circuit structure of each SC charger is not limited.

Optionally, the second charging circuit is an SC charger (SC charger). In FIG. 3, two SC chargers may be disposed, which are respectively denoted as a first SC charger (SC Charger 1, SC1) and a second SC charger (SC Charger 2, SC2). The SC1 and the SC2 are separately connected to the trunk line. The trunk line outputs a voltage Vbus1 to the SC1, and outputs a voltage Vbus2 to the SC2. There is a path impedance 1 between the SC1 and a trunk line voltage Vbus, and there is a path impedance 2 between the SC2 and the trunk line voltage Vbus.

Optionally, the foregoing charging/discharging circuit further includes a collection circuit and a power circuit. As shown in FIG. 3, the collection circuit 300 is configured to collect information about the battery pack, is connected to the processing module and the battery pack, and collects voltages and/or circuit of all batteries in the battery pack according to a specific rule, for example, periodically or in real time, and reports these voltages and/or currents to the processing module. In this example, the collection circuit 300 includes a sensor 1 and a sensor 2. The sensor 1 is connected to the battery 1 to collect a voltage and/or a current of the battery 1, and the sensor 2 is connected to the battery 2 to collect a voltage and/or a current of the battery 2. It should be understood that the collection circuit 300 may further include other sensors. A quantity and types of the included sensors in this embodiment are not limited.

The power circuit may be disposed in the charging/discharging circuit 100, or may be disposed outside the charging/discharging circuit 100 as a separate device or circuit. Optionally, the power circuit may be a power management integrated circuit (Power Management IC, PMIC), which is also referred to as a power management IC and is a special-purpose integrated circuit. The power circuit is configured to manage a power device in a host system, and is usually used in a mobile phone and various mobile terminal devices.

A main function of the PMIC is to control a power flow and a flow direction to meet requirements of the host system. The PMIC selects power in a plurality of power supplies (for example, an external direct-current power supply, a battery, and a USB power supply, and so on), and distributes the power to each part of the host system, for example, provide a plurality of power supplies with different voltages and charge an internal battery.

Optionally, the power circuit may be a system on chip (System on Chip, SoC), which is also referred to as a system-level chip and is a special-purpose integrated circuit, including a complete system and all content of embedded software.

The following describes a charging/discharging principle of the charging/discharging circuit.

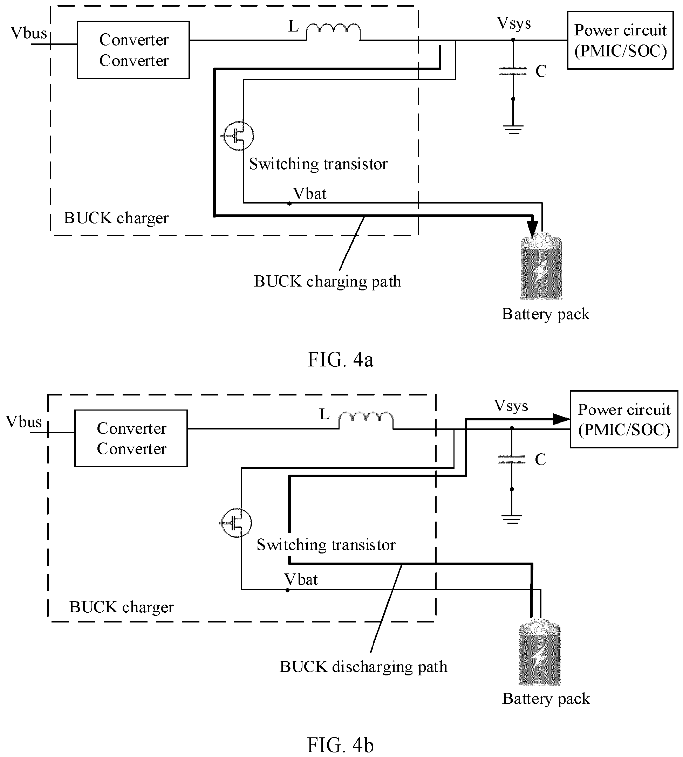

In this embodiment, a charging/discharging principle of the first charging circuit (BUCK charger) is mainly described. As shown in FIG. 4a, the BUCK charger specifically includes a converter (converter) and a switching transistor, and may further include devices such as an inductor L and a capacitor C. The converter is configured to convert the trunk line Vbus into Vbat or Vsys. The switching transistor has a switching function, and can switch an output voltage between Vbat and Vsys. When the switching transistor connects a port to Vbat, the first port of the BUCK charger is connected to the battery pack to charge the battery pack. The BUCK charging path includes: the trunk line Vbus passes through the converter, the inductor L, and the switching transistor, and then outputs Vbat from the first port to charge the battery pack.

When the battery pack is discharged, the switching transistor connects to Vsys, and outputs the voltage Vsys to the power circuit. As shown in FIG. 4b, in this case, the battery pack is discharged. The BUCK discharging path includes: after a voltage output by the battery pack passes through the switching transistor, the voltage Vsys is output, where one end of the output voltage Vsys is connected to the PMIC or an SoC, and the other end is grounded by using the capacitor C, so as to supply power to the PMIC or the SoC.

With reference to the charging/discharging principle of the BUCK charger, a charging and discharging process of the circuit shown in FIG. 2 is described.

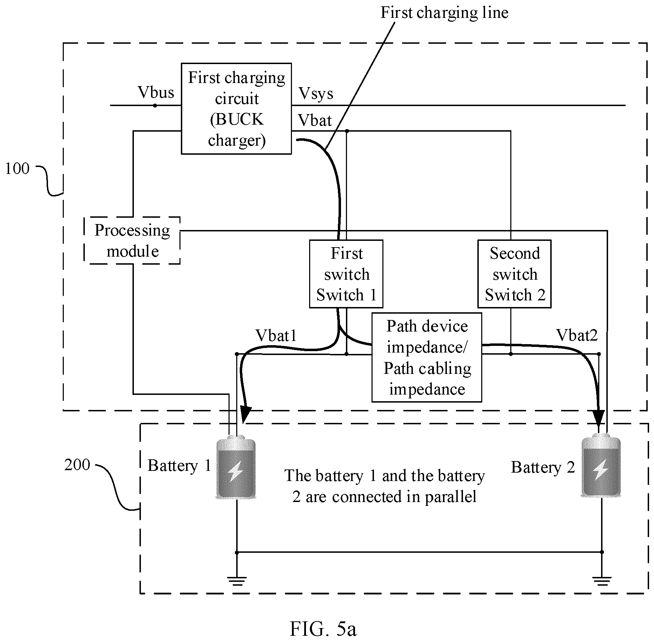

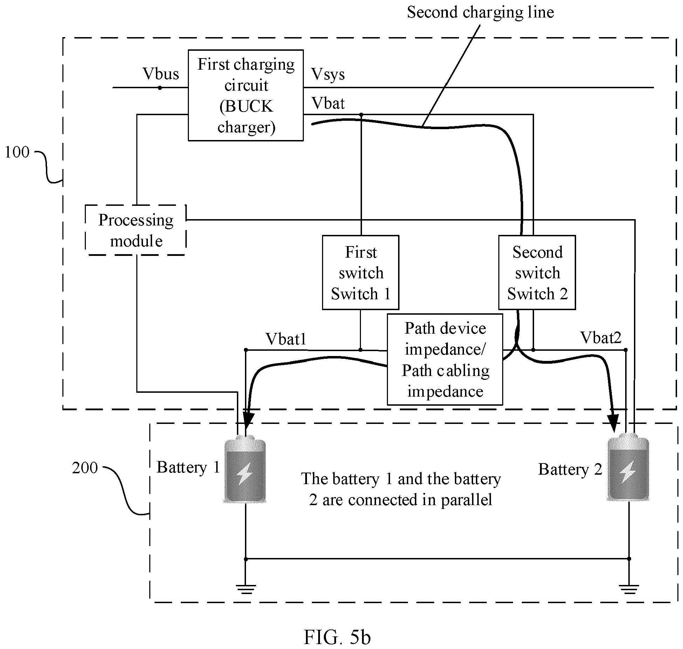

In this embodiment, the battery 1 and the battery 2 are connected in parallel, and the switch 1 and the switch 2 are connected to a branch of the battery 1 and a branch of the battery 2, respectively. Connection relationships are shown in FIG. 5a and FIG. 5b.

When the processing module controls the switch 1 to be turned on (Switch ON) and the switch 2 to be turned off (Switch OFF), the first charging circuit charges the battery 1 and the battery 2 by using the first charging line, as shown in FIG. 5a. After passing through the first switch, the voltage Vbat that is output by the first port of the first charging circuit is divided into two branches: One branch (for example, a first branch) is used to charge the battery 1, and the other branch (for example, a second branch) is used to charge the battery 2. In addition, assuming that a voltage used by the first branch to charge the battery 1 is Vbat1, and a voltage used by the second branch to charge the battery 2 is Vbat2, because the output charging voltage Vbat has a path device impedance and/or a path cabling impedance on the second branch used to charge the battery 2, a voltage drop is generated, and consequently, Vbat1 is greater than Vbat2. In this case, a charging rate of the battery 1 is higher than a charging rate of the battery 2.

When the switch 1 is turned off (Switch OFF) and the switch 2 is turned on (Switch ON), the first charging circuit charges the battery 1 and the battery 2 by using the second charging line, as shown in FIG. 5b. After passing through the second switch, the voltage Vbat output by the first charging circuit is divided into two branches: One branch is used to charge the battery 1, and the other branch is used to charge the battery 2. In addition, the branch used to the battery 1 needs to pass through the path device impedance and/or the path cabling impedance. However, the branch used to charge the battery 2 does not pass through the impedance. Therefore, for a voltage output to the battery 1, a voltage drop is generated, and Vbat1 is less than Vbat2. In this case, the charging rate of the battery 1 is lower than the charging rate of the battery 2.

In this embodiment, a processing module is used to control a turn-on status or a turn-off status of the first switch and the second switch, so that the BUCK charger charges the battery pack alternately by using the first charging line or the second charging line, thereby ensuring that the dual batteries in the battery pack are charged equally.

Similarly, a principle of charging the battery pack by the SC charger by using the second charging circuit is the same as the principle of charging by using the first charging circuit. When the processing module switches the SC charger to charge the battery pack, the processing module switches between different charging lines by using the third switch in the SC1 and the fourth switch in the SC2, so that the battery 1 and the battery 2 are charged equally.

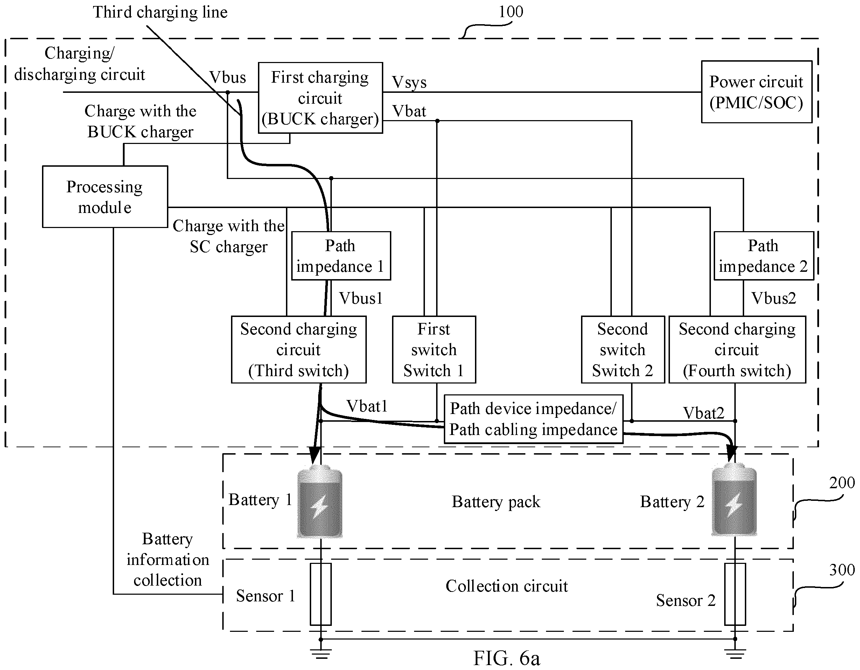

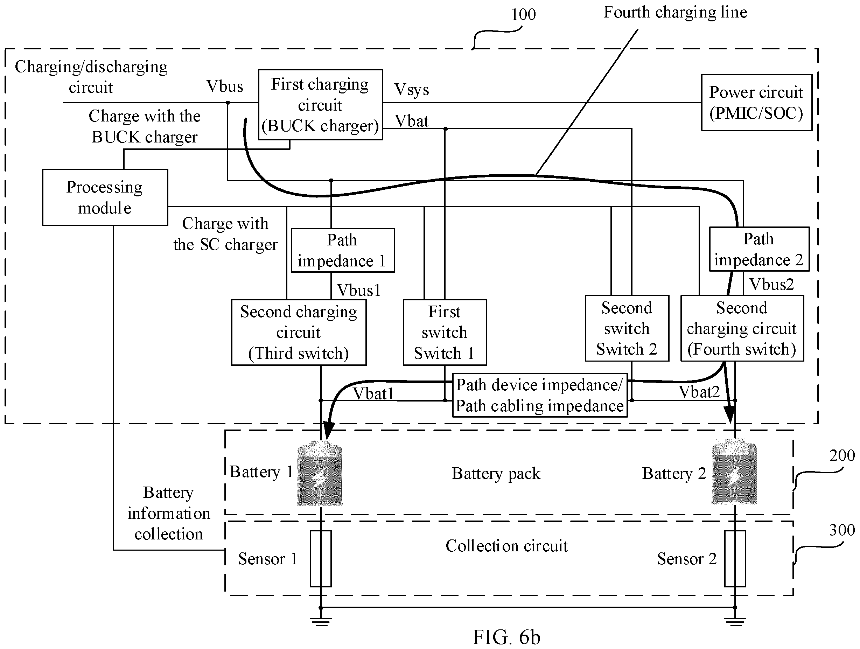

Specifically, a charging process is shown in FIG. 6a and FIG. 6b. When the third switch is turned on (Switch ON) and the fourth switch is turned off (Switch OFF), the second charging circuit charges the battery 1 and the battery 2 by using a third charging line, as shown in FIG. 6a. After passing through the path impedance 1 and the SC1 (the third switch), the trunk line voltage Vbus is divided into two branches, such as a first branch and a second branch, where the first branch is used to charge the battery 1, and the second branch is used charge the battery 2. In addition, a charging voltage of the second branch passes through the path device impedance and/or the path cabling impedance, and a voltage drop is generated. However, the first branch used to charge the battery 1 does not pass through the impedance. Therefore, a voltage used to charge the battery 1 is higher than a voltage used to charge the battery 2, that is, Vbat1 is greater than Vbat2. In this case, a charging rate of the battery 1 is higher than a charging rate of the battery 2.

When the third switch is turned off (Switch OFF) and the fourth switch is turned on (Switch ON), the second charging circuit charges the battery 1 and the battery 2 by using the fourth charging line, as shown in FIG. 6b. After passing through the path impedance 2 and the SC2 (the fourth switch), the trunk line voltage Vbus is divided into two branches: One branch is used to charge the battery 1, and the other branch is used to charge the battery 2. In addition, the voltage of the branch used to charge the battery 1 passes through the path device impedance and/or the path cabling impedance, and a voltage drop is generated. However, the voltage of the branch used to charge the battery 2 does not pass through the impedance. Therefore, a voltage used to charge the battery 1 is lower than a voltage used to charge the battery 2, that is, Vbat1 is less than Vbat2. In this case, the charging rate of the battery 1 is lower than the charging rate of the battery 2.

The voltage values and/or the current values of all the foregoing lines can be obtained by the collection circuit and reported to the processing module. Alternatively, the processing module may obtain the voltage values and/or the current values in another manner, for example, each charging line is connected to the processing module, and reports a current charging voltage value and/or a current charging current value to the processing module.

It should be understood that the circuits shown in FIG. 6a and FIG. 6b include the first charging circuit and the second charging circuit. The first charging circuit may charge the battery pack by using the first charging line and the second charging line shown in FIG. 5a and FIG. 5b. For a specific switching status of each charging line, refer to the foregoing descriptions in FIG. 5a and FIG. 5b. Details are not described herein again.

The following describes a process in which the circuit charges the battery pack in detail.

If the charging/discharging circuit includes only the first charging circuit, that is, a BUCK charger, when the BUCK charger charges the battery pack, a current output to the battery 1 and a current output to the battery 2 are a current 1 and a current 2, respectively, where the current 1 is represented as Ibat1, and the current 2 is represented as Ibat2. Because the path device impedance and/or the path cabling impedance are/is relatively high, there is a bias current between Ibat1 and Ibat2, and consequently, different amounts of power enter the battery 1 and the battery 2 at the same time. To reduce the bias current and enable the charger to charge the two batteries with equal power, the switch 1 and the switch 2 need to be dynamically switched based on a voltage difference between Vbat1 and Vbat2, for example, Vbat1 - Vbat2 is less than Vth_1 (a first threshold), so as to control equalization of power charged to the battery 1 and the battery 2.

If the charging/discharging circuit further includes the second charging circuit, that is, the SC charger, when the SC charger charges the battery pack, the trunk line voltage Vbus is output to the SC1 and the SC2. Because of impact of the path cabling impedance of Vbus, there is a bias current between current flowing into the battery 1 and current flowing into the battery 2, that is, between Ibat1 and Ibat2. As a result, power flowing into the battery 1 and power flowing into the battery 2 in a specific time period are different. To reduce the bias current and enable the battery 1 and the battery 2 to be charged with equal power in a same time period, the third switch of the SC1 and the fourth switch of the SC2 need to be dynamically switched based on the voltage difference between Vbat1 and Vbat2, so as to control equalization of power charged to the battery 1 and the battery 2.

To improve charging efficiency of the battery and ensure that each battery can be fully charged, an embodiment of this application provides a battery charging method. The method can be performed by the foregoing processing module. In this embodiment, a charging process of a battery pack (a battery 1 and a battery 2) is described in a sequence of a timeline t.

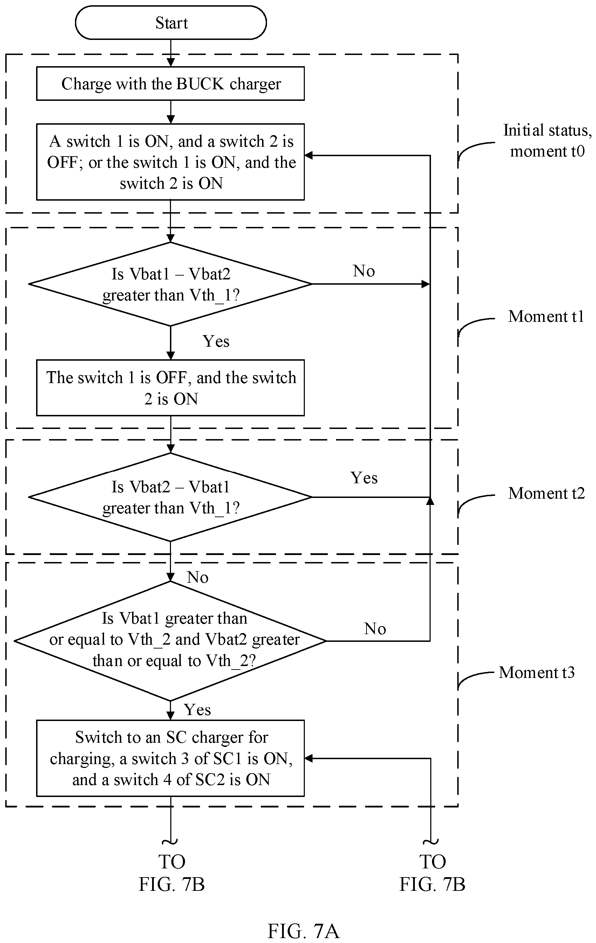

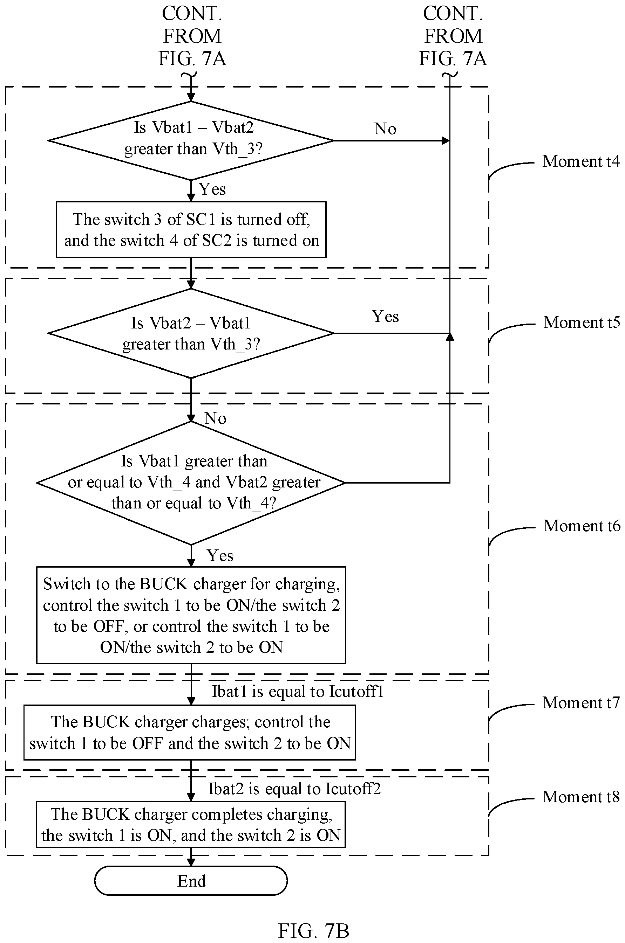

A first charging circuit and a second charging circuit charge the battery 1 and the battery 2 alternately. Specifically, as shown in FIG. 7A and FIG. 7B, the method includes:
1. At a moment t0, in an initial status, a BUCK charger charges the battery pack.

By default, a switch 1 is turned on (ON), and a switch 2 is turned off (OFF), or both the switch 1 and the switch 2 are turned on (ON). In this case, the BUCK charger charges the battery 1 and the battery 2 by using the first charging line. The BUCK charger outputs a voltage Vbat. After passing through the first charging line, the voltage Vbat is divided into two branches. Currents of the two branches are Ibat1 and Ibat2, Ibat1 is greater than Ibat2, and a voltage increasing rate of the battery 1 is higher than that of the battery 2. A charging voltage corresponding to the battery 1 is Vbat1, and a charging voltage corresponding to the battery 2 is Vbat2.

The processing module is configured to: obtain a first voltage of the battery 1, where the first voltage is the charging voltage Vbat1 and a first current, and the first current is Ibat1; and obtain a second voltage of the battery 2, where the second voltage is the charging voltage Vbat2 and a second current, and the second current is Ibat2.

In an implementation, the processing module periodically obtains the first voltage and/or the first current of the battery 1 by using a sensor 1 (Sensor 1); and periodically obtains the second voltage and/or the second current of the battery 2 by using a sensor 2 (Sensor 2).

In this embodiment, "turn-on" of a switch may be represented as "ON", and "turn-off" of a switch may be represented as "OFF".

### 2. At a moment t1

As a charging time increases, at the moment t1, Vbat1 is greater than Vbat2, and when Vbat1 - Vbat2 is greater than Vth_1 (a first threshold), the switch 2 is controlled to be turned on, the switch 1 is controlled to be turned off, and the BUCK charger charges the battery 1 and the battery 2 by using the second charging line. Vbat1 - Vbat2 is a voltage difference between the charging voltage of the first battery and the charging voltage of the second battery, and the voltage difference is represented as "ΔV", that is, ΔV=Vbat1 - Vbat2. In this example, a voltage difference at the moment t1 is a first voltage difference ΔV1.

In this case, the impedance is short-circuited on a branch of the battery 2. When flowing to the battery 1, a voltage of Vbat passes through a path device impedance and/or a path cabling impedance, and a voltage drop is generated. However, a voltage of Vbat flowing to the battery 2 does not pass through the impedance. Therefore, the current Ibat2 flowing to the battery 2 is higher than the current Ibat1 flowing to the battery 1, that is, Ibat1 is less than Ibat2, and a voltage increasing rate of the battery 2 is higher than that of the battery 1.

As the charging time increases, at a moment, Vbat1 is equal to Vbat2.

In addition, if Vbat1 - Vbat2 is less than or equal to Vth _1, the battery 1 and the battery 2 continue to be charged until the voltage difference ΔV is greater than the first threshold Vth_1, that is, Vbat1 - Vbat2 is greater than Vth_1.

Optionally, the first threshold Vth_1 is between 0.1 V to 0.2 V, and includes end values 0.1 V and 0.2 V

### 3. At a moment t2

After the moment t1, a charging rate of the battery 2 is higher than that of the battery 1. Therefore, at a moment, the voltage Vbat2 used by the BUCK charger to charge the battery 2 is greater than the charging voltage Vbat2 of the battery 1, that is, Vbat1 is less than Vbat2. At the moment t2, when the voltage difference is greater than the first threshold Vth_1, that is, Vbat2 - Vbat1 is greater than Vth_1, the switch 1 is controlled to be turned on (ON), and the switch 2 is controlled to be turned off (OFF). In this case, the path device impedance and/or the path cabling impedance on a branch of the battery 1 are/is short-circuited, and the voltage and the current that are used to charge the battery 2 need to pass through the impedance. Therefore, Ibat1 is greater than Ibat2, and the voltage increasing rate of the battery 1 is higher than that of the battery 2.

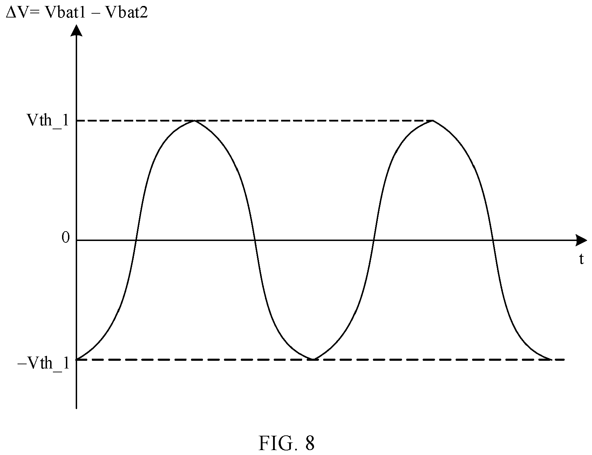

That is repeatedly performed. A switching process is shown in FIG. 8. The voltage difference ΔV changes between the first threshold Vth_1 and - Vth_1, but does not exceed the first threshold, so that the voltage difference ΔV between the voltages used by the BUCK charger to charge the two batteries is not excessively large, so as to ensure an equal power increasing rate of the two batteries, and avoid an excessively high power increasing rate of a battery of one branch and an excessively low power increasing rate of a battery of the other branch.

In addition, for a charging/discharging circuit including the second charging circuit, that is, an SC charger, the processing module is further configured to switch between the first charging circuit and the second charging circuit when detecting that a voltage and/or a current of a charging line of each battery in the battery pack meet/meets a preset condition. When the charging circuit is switched to the second charging circuit to charge the battery pack, fast charging for the battery pack can be implemented, and charging efficiency is improved.

Specifically, as shown in FIG. 7A and FIG. 7B, the method further includes:

### 4. At a moment t3

At the moment t3, when Vbat1 is greater than or equal to Vth_2 (a second threshold) and Vbat2 is greater than or equal to Vth_2 (the second threshold), that is, when a first preset condition is met, the processing module controls the charging circuit to be switched from the first charging circuit (the BUCK charger) to the second charging circuit (an SC Charger 1 and an SC Charger 2), as shown in FIG. 6a or FIG. 6b.

In a possible implementation, the processing module sends a first signal to the BUCK charger, where the first signal is used to indicate the BUCK charger to stop charging the battery 1 and the battery 2. The processing module sends a second signal to the second charging circuit, where the second signal is used to indicate the SC Charger 1 and the SC Charger 2 to charge dual batteries. The SC Charger 1 and the SC Charger 2 can provide a high-current fast charging service for the battery 1 and the battery 2.

In this case, the SC Charger 1 is turned on (Switch ON), and the SC Charger 2 is turned on (Switch ON).

In this case, because the path device impedance and/or the path cabling impedance exist/exists between Vbus1 and Vbus2, the two voltages are different because of a voltage drop, Ibat1 is greater than Ibat2, and a power increasing rate of the battery 1 is higher than that of the battery 2. Correspondingly, Vbat1 may be greater than Vbat2.

In addition, when either or both of the two voltages Vbat1 and Vbat2 are less than the second threshold, the switch 1 and the switch 2 are still controlled to be turned on or turned off successively, and the two batteries continue to be charged until both Vbat1 and Vbat2 are greater than or equal to the second threshold, and the foregoing "moment t3" is reached.

It should be noted that, at the moment t3, when the charging circuit is switched, statuses of the switch 1 and the switch 2 are not limited, that is, whether the switch 1 and the switch 2 are Switch ON or Switch OFF is not limited, because in this case, the first charging circuit has stopped supplying power to the battery pack.

### 5. At a moment t4

As the charging time increases, at the moment t4, when Vba1 - Vbat2 is greater than Vth_3 (a third threshold), the SC Charger 1 is turned off, and the SC Charger 2 is kept turned on. In a specific implementation, the processing module sends an indication signal to the SC Charger 1 and the SC Charger 2, so as to indicate a third switch in the SC Charger 1 to be turned off (Switch OFF), and also indicate a fourth switch in the SC Charger 2 to be turned on (Switch ON). In this case, the second charging circuit charges the battery 1 and the battery 2 by using a fourth charging line shown in FIG. 6b. A voltage Vbus1 transmitted to the battery 1 passes through the path device impedance and/or the path cabling impedance, and a voltage drop is generated. Therefore, in this case, Ibat1 is less than Ibat2, and a power increasing rate of the battery 2 is higher than that of the battery 1.

### 6. At a moment t5

As the charging time increases, at a moment, Vbat1 is equal to Vbat2; and then the two batteries continue to be charged, and Vbat1 is less than Vbat2. At the moment t5, when Vbat2 - Vbat1 is greater than Vth_3 (the third threshold), the processing module controls the third switch in the SC Charger 1 to be turned on (Switch ON), and keeps the fourth switch in the SC Charger 2 turned on. In this case, the path device impedance and/or the path cabling impedance are/is short-circuited, Ibat1 is greater than Ibat2, and the power increasing rate of the battery 1 is higher than that of the battery 2.

That is performed repeatedly, so that the voltage difference ΔV between the voltages that are input to the battery 1 and the battery 2 does not exceed the third threshold Vth_3, thereby avoiding a case that the power increasing rate of either of the battery 1 and the battery 2 is higher. This method ensures, by switching switches in the SC Charger 1 and the SC Charger 2 to be turned on or turned off, that power of the battery 1 and the battery 2 increases equally.

### 7. At a moment t6

At the moment t6, when Vbat1 is greater than or equal to Vth_4 (a fourth threshold) and Vbat2 is greater than or equal to Vth_4 (the fourth threshold), that is, when a second preset condition is met, and the voltage difference between the charging voltage of the battery 1 and that of the battery 2 does not exceed the third threshold Vth_3, the processing module controls the charging circuit to be switched from the second charging circuit to the first charging circuit. In a possible implementation, the processing module sends a third signal to the BUCK charger, and sends a fourth signal to the SC charger. The third signal indicates the BUCK charger to supply power to the battery pack, and the fourth signal indicates the SC Charger 1 and the SC Charger 2 to stop supplying power.

After receiving the third signal, the BUCK charger controls the switch 1 to be turned on (Switch ON) and the switch 2 to be turned off (Switch OFF). In this case, the BUCK charger charges the battery 1 and the battery 2 by using the first charging line.

### 8. At a moment t7

At the moment t7, when the obtained voltage and current meet a relationship that Ibat1 is equal to Icutoff1 (a first cutoff current) and Vbat1 is equal to Vcutoff1 (a first cutoff voltage), the processing module controls the switch 1 to be turned off (Switch OFF) and the switch 2 to be turned on (Switch ON). This indicates that the battery 1 is fully charged.

### 9. At a moment t8

At the moment t8, when the obtained voltage and current meet a relationship that Ibat2 is equal to Icutoff2 (a second cutoff current) and Vbat2 is equal to Vcutoff2 (a second cutoff voltage), it indicates that the battery 2 is fully charged, and the first charging circuit is controlled to stop charging the battery 1 and the battery 2. For example, the switch 1 is turned on (Switch ON), and the switch 2 is also turned on (Switch ON), and in this case, the battery pack is ready to discharge. Vcutoff1 represents a full-power voltage of the battery 1, and is also referred to as the first cutoff voltage. Icutoff1 represents a full-power current of the battery 1, and is also referred to as the first cutoff current. Vcutoff2 represents a full-power voltage of the battery 2, and is also referred to as the second cutoff voltage. Icutoff2 represents a full-power current of the battery 2, and is also referred to as the second cutoff current. Vcutoff1 and Vcutoff2 may be the same or may be different. Icutoff1 and Icutoff2 may be the same or may be different.

It should be noted that the foregoing moment t7 and moment t8 may be a same moment or a small time interval. A sequence and values of t7 and t8 are not limited in this embodiment. For example, the battery 2 is fully charged first, and then the switch 2 is turned off and the switch 1 is turned on, so that the charger continues to charge the battery 1, and the battery 1 is fully charged. Thresholds for switching the foregoing switches and/or charging circuits in this embodiment include the following:
The first threshold Vth_1 is a threshold for determining a battery voltage difference that is used for switching between the switch 1 and the switch 2 when the BUCK charger is charging.

A second threshold Vth_2 is a threshold for determining a battery voltage that is used for switching from the BUCK charger to the SC charger;

A third threshold Vth_3 is a threshold for determining a battery voltage that is used for switching the SC Charger 1 and/or the SC Charger 2 for charging; and

A fourth threshold Vth_4 is a threshold for determining a battery voltage that is used for switching between the SC charger and the BUCK charger for charging.

Vth_2 is greater than Vth_1, and Vth_4 is greater than Vth_2. Vth_1 and Vth_3 may be equal or may be not equal.

Values of the foregoing Vth_1 to Vth_4 may be set based on actual statuses of the circuit and the battery, and values of all the thresholds are not limited in this embodiment.

Optionally, a value of Vth_1 is 0.1-0.2 V, or Vth_3 is equal to 0.1-0.2 V.

Optionally, Vth_2 is equal to 3.5 V or is about 3.5 V.

Optionally, Vth_4 is equal to 4.4 V or is about 4.4 V.

Optionally, both Vcutoff1 and Vcutoff2 are equal to 4.45 V or are about 4.45 V.

According to the method provided in this embodiment, the processing module controls use of the BUCK charger for charging or use of the SC charger for fast charging based on the voltages and the currents of the battery 1 and the battery 2. In addition, in a charging mode by using the BUCK charger, the processing module controls, based on the voltage and/or the current of each battery branch, the switch 1 and the switch 2 to be turned on or turned off alternately; and in a fast charging mode by using the SC charger, the processing module controls a switch 3 and a switch 4 in the SC Charger 1 or the SC Charger 2 to be turned on or turned off alternately, so that the voltage difference between the battery 1 and the battery 2 is not excessively large, thereby ensuring that the charging rates of the dual batteries are equal, reducing the charging time, improving the charging efficiency, and resolving the technical problem that one battery is fully charged, but the other battery is not fully charged.

It should be noted that the foregoing moments t0 to t9 each may be a time point, or may be a time interval; that is, within a time period, a corresponding switching action of switches can be performed, provided that the voltage Vbat1, Vbat2, and the voltage difference ΔV meet the foregoing threshold conditions.

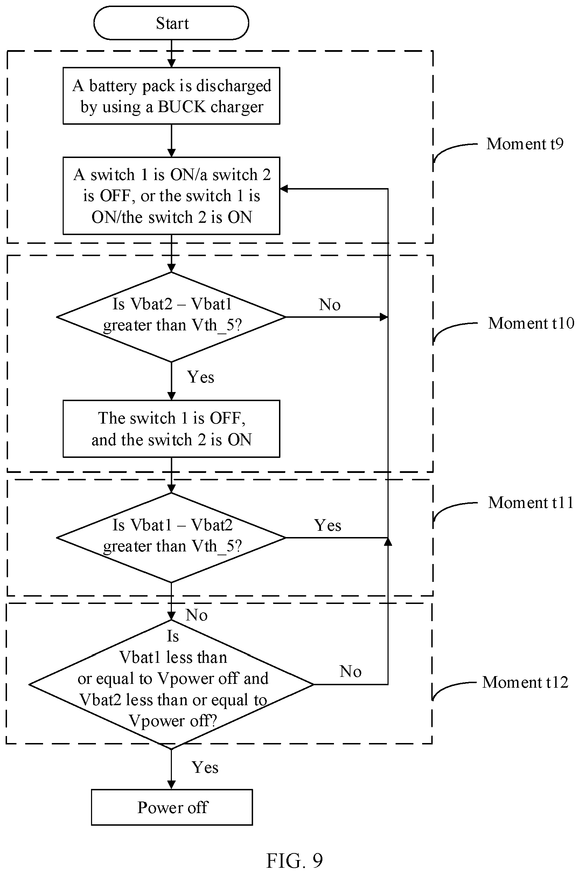

In addition, the foregoing charging/discharging circuit in this embodiment may further supply power to a power circuit, that is, the battery pack is discharged. For a principle of discharging, refer to the foregoing example shown in FIG. 4b. A second port of the BUCK charger is connected to the power circuit. Specifically, a method for discharging the battery pack by using the charging/discharging circuit is controlled by the foregoing processing module. As shown in FIG. 9, the control method includes:

### 10. At a moment t9

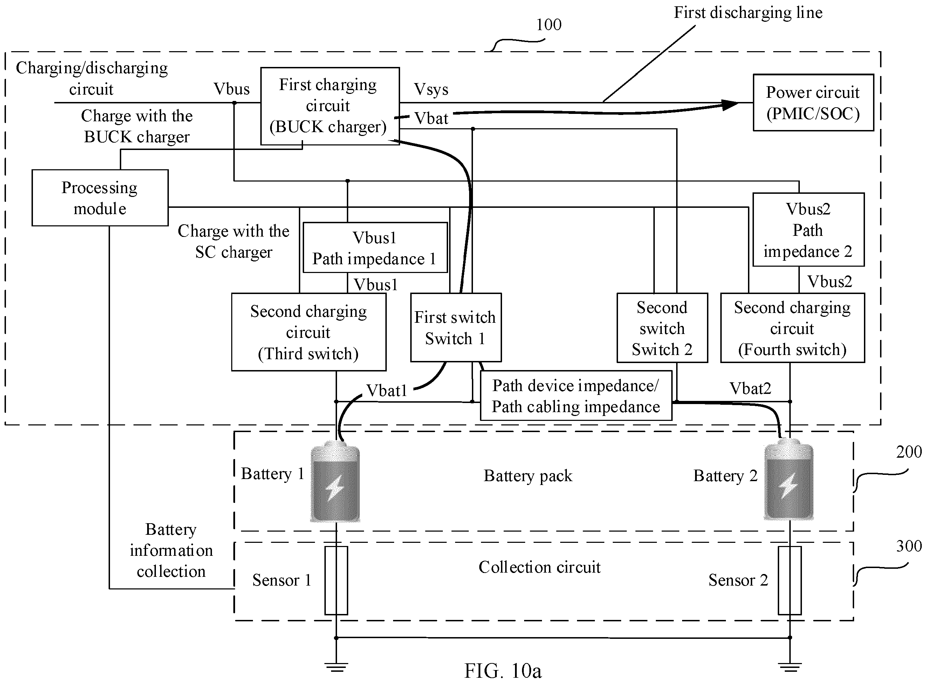

The battery pack is discharged by using the BUCK charger. In this case, the switch 1 is turned on (Switch ON), and the switch 2 is turned off (Switch OFF), or both the switch 1 and the switch 2 are turned on (Switch ON). When the switch 1 is turned on and the switch 2 is turned off, the battery 1 and the battery 2 supply power to the power circuit by the charging/discharging circuit by using a first discharging circuit, as shown in FIG. 10a. A voltage output by the battery 2 needs to pass through the path device impedance and/or the path cabling impedance, and a voltage drop is generated, while a voltage output by the battery 1 does not need to pass through the impedance. As a result, a discharging rate of the battery 1 is higher than that of the battery 2. Assuming that a discharging voltage corresponding to the battery 1 is Vbat1 and a discharging voltage of the battery 2 is Vbat2, Vbat1 is less than Vbat2 at the moment t9.

The moment t9 may be the same as or different from the moment t8 in the foregoing embodiment. This is not limited in this embodiment.

### 11. At a moment t10

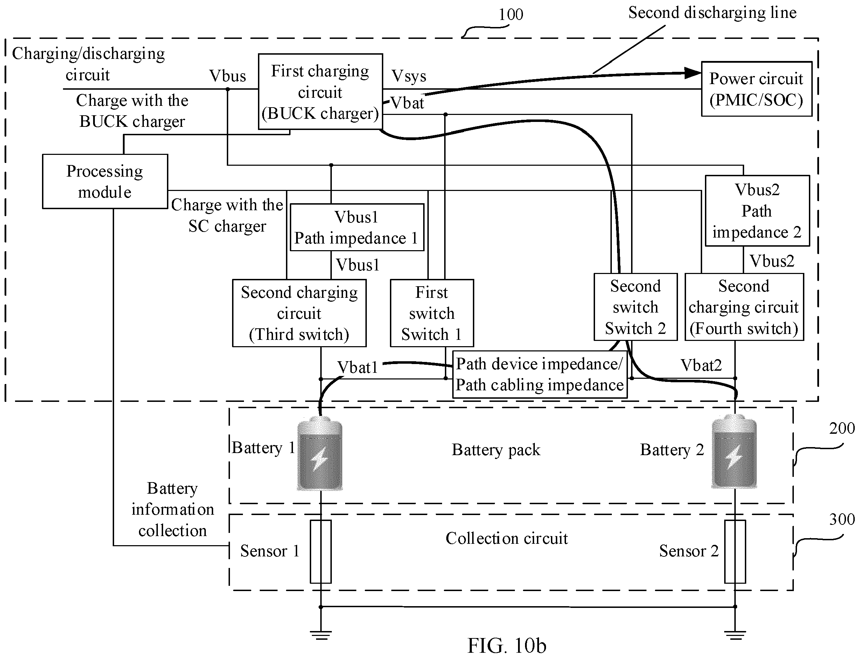

As the charging time increases, at the moment t10, Vbat1 is less than Vbat2, and when Vbat2 - Vbat1 is greater than Vth_5 (a fifth threshold), the switch 2 is controlled to be turned on (Switch ON), and the switch 1 is controlled to be turned off (Switch OFF). In this case, the voltage difference between the voltage output by the battery 1 and the voltage output by the battery 2 is ΔV = Vbat2 - Vbat1. In this case, the charging/discharging circuit supplies power to the power circuit by using a second discharging line, as shown in FIG. 10b. The voltage output by the battery 1 needs to pass through the path device impedance and/or the path cabling impedance, and a voltage drop is generated; then the voltage passes through the second port of the BUCK to supply power to the power circuit. Because the voltage output by the battery 1 does not pass through the impedance, a discharging rate of the battery 2 is increased and the discharging rate of the battery 1 is decreased, so as to ensure that the battery 2 is discharged fast, and the battery 1 is discharged slowly, so that power of the two batteries is equal.

Optionally, the fifth threshold Vth_5 is 0.1-0.2 V

### 12. At a moment t11

After a time period, Vbat1 is equal to Vbat2, and then at the moment t11, Vbat1 is greater than Vbat2, and when Vbat1 - Vbat2 is greater than Vth_5 (the fifth threshold), the status of the switch 1 and that of the switch 2 are switched again, for example, the switch 1 is controlled to be turned on (Switch ON), and the switch 2 is controlled to be turned off (Switch OFF), so that the discharging rate of the battery 1 is increased, and the discharging rate of the battery 2 is decreased, and a power/voltage difference between the two batteries is not excessively large. That is repeatedly performed.

### 13. At a moment t12

At the moment t12, when the processing module detects that the voltage output by the battery 1 reaches a first power-off voltage, that is, Vbat1 is less than or equal to Vpower off1 (the first power-off voltage), or the voltage output by the battery 2 reaches a second power-off voltage, that is, Vbat1 is less than or equal to Vpower off2 (the second power-off voltage), it indicates that the battery 1 or the battery 2 has been fully discharged, and a power-off operation is performed, or the battery 1 and the battery 2 are charged.

Vpower off represents a power-off voltage, or is referred to as an end voltage.

Optionally, Vpower off1 and Vpower off2 may be equal or may be not equal.

If Vbat1 and Vbat1 do not reach the power-off voltage Vpower off, for example, are greater than Vpower off, the batteries may continue to be discharged, and it needs to be ensured that the voltage difference between the discharging voltages of the two batteries does not exceed the fifth threshold. The voltage/current values at the foregoing moments may be collected in real time or periodically by the sensor 1 and the sensor 2, and then a collection result is reported to the processing module. In the charging/discharging circuit providing in this embodiment, the processing module controls, based on the obtained voltages and currents of the battery 1 and the battery 2, the switch 1 and the switch 2 to be turned on and turned off alternately, so that the voltage difference between the two batteries does not exceed the threshold, thereby ensuring that the two batteries can be discharged until the cutoff voltage is reached, that is, can be fully discharged, so as to prevent a case that one battery is fully charged, but the other battery is not fully charged.

Generally, a battery may be charged or discharged for a specific quantity of times. When one battery in the battery pack is not fully charged or not fully discharged, the battery continues to be charged or discharged, so that the power of the battery is always not fully discharged or fully consumed before continuing to be charged. Because the other battery that is fully charged or fully discharged, charging/discharging depths of the two batteries are different, and therefore aging speeds of the two batteries are different. According to the method provided in this embodiment, charging and discharging rates of the batteries in the battery pack can be increased or decreased equally, so that charging and discharging depths of the battery pack are the same, and the aging speeds of the batteries are the same.

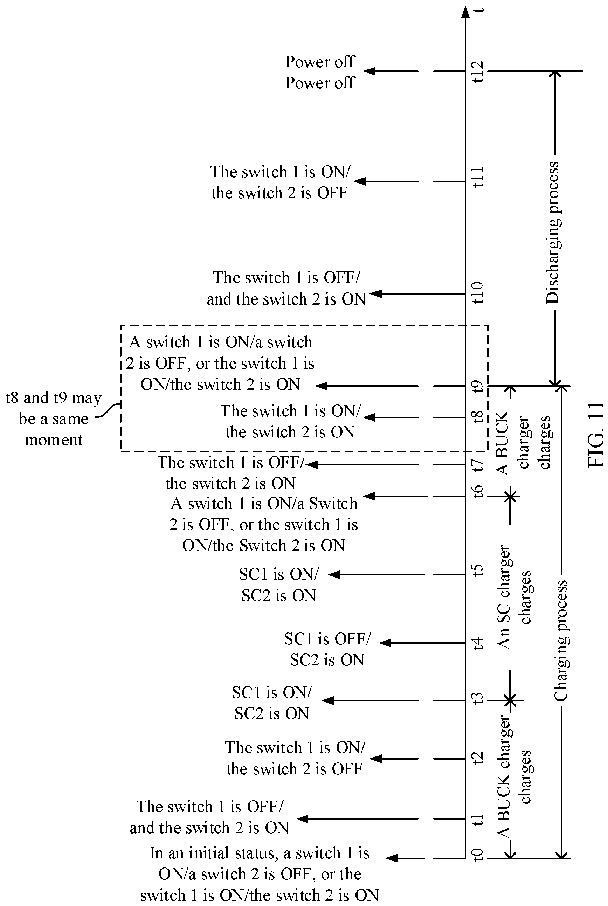

FIG. 11 is a sequence diagram of a charging and discharging process of a battery according to this application. The sequence diagram includes the moment t0 to the moment t12, and records an entire charging and discharging process of the battery pack. A time period from t0 to t9 represents a process of charging the battery pack by a circuit, and a time period from t9 to t10 represents a process of discharging the battery pack.

In the charging process, in a time period from t0 to t3, the dual batteries are first charged by using the first charging circuit, that is, the BUCK charger. When the first preset condition is met, the processing module switches from the first charging circuit to the second charging circuit, and the SC charger performs fast charging on the battery pack, which is corresponding to a time period t3 to t6. When the battery pack nearly reaches full power, that is, when the second preset condition is met, the charging circuit is switched to the first charging circuit, and the BUCK charger charges the dual batteries, which is corresponding to a time period from t6 to t9.

In the discharging process, in a period from t9 to t12, because fast charging is not involved, only a BUCK discharging path is required to discharge the battery pack, and there is no need to switch between the first charging circuit and the second charging circuit.

In addition, in the process of charging by the BUCK charger and the SC charger, and in the process of discharge by the BUCK discharging path, the voltage difference between the two battery branches may be adjusted by using the switch 1/switch 2 or the switch 3/switch 4, and a charging and discharging rate of a branch is controlled by using the impedance, so as to equalize charging and discharging rates of the two branch batteries, and prevent a case that a charging or discharging rate of one battery is excessively fast, and a charging or discharging rate of the other battery is excessively low.

In addition, the charging/discharging circuit provided in this embodiment further controls, based on the voltages and currents of the battery 1 and the battery 2, the switch 1 and the switch 2 to be turned on or turned off, so as to perform alternate charging or alternate discharging on the dual batteries, thereby ensuring that the dual batteries have a same charging/discharging depth and a same battery aging speed.

An embodiment further provides an electronic device. The electronic device may be any terminal device, and includes the charging/discharging circuit shown in FIG. 2 or FIG. 3. The charging/discharging circuit includes a processing module, and the processing module is configured to implement a charging method and a discharging method in the foregoing embodiment.

Optionally, the processing module may be a software module integrated into the charging/discharging circuit, or may be located outside the charging/discharging circuit, for example, a processing chip. In addition, the processing module may further be a hardware device, such as a processor or a processing chip, and the processor or the processing chip is connected to the charging/discharging circuit. A form and a connection manner of the processing module are not limited in this embodiment.

When the processing module is a hardware device such as the processor, the processor may include an integrated circuit (Integrated Circuit, IC), for example, may include a single packaged IC, or may include a plurality of connected packaged ICs with a same function or different functions. For example, the processor may only include a combination of a central processing unit (Central Processing Unit, CPU), a digital signal processor (Digital Signal Processor, DSP), and a control chip in a transceiver.

In addition, the electronic device further includes a memory or a storage unit. Using the memory as an example, the memory may include a volatile memory (volatile memory) such as a random access memory (Random Access Memory, RAM), or may further include a non-volatile memory (non-volatile memory) such as a flash memory (flash memory), a hard disk drive (Hard Sisk Drive, HDD), or a solid-state drive (Solid-State Drive, SSD); and the memory may further include a combination of the foregoing types of memories. The memory may store a program or code. The processor may implement a function of the terminal device by executing the program or the code. In addition, the memory may independently exist and be connected to a processor 902 by using a communication bus; or the memory may be integrated with the processor.

Optionally, the memory or the storage unit may be a computer storage medium. The computer storage medium may store a program; and when the program is executed, some or all of the steps in the embodiments of the method for charging and discharging a battery according to this application may be included.

All or some of the foregoing embodiments may be implemented by software, hardware, firmware, or any combination thereof. When software is used to implement the embodiments, the embodiments may be implemented completely or partially in a form of a computer program product.

The computer program product includes one or more computer instructions. When a computer loads and executes the computer program, the processes or functions according to the foregoing embodiments of this application are completely or partially generated.

The computer instruction may be stored in a computer-readable storage medium or transmitted from one computer-readable storage medium to another computer-readable storage medium. For example, the computer instruction may be transmitted from one network device, computer, server, or data center to another device, computer, or server in a wired or wireless manner.

**In** addition, in the description of this application, unless otherwise specified, "a plurality of" means two or more. **In** addition, for ease of clearly describing the technical solutions in the embodiments of this application, in the embodiments of this application, words such as "first" and "second" are used to distinguish same items or similar items whose functions and effects are basically the same. A person skilled in the art may understand that the words such as "first" and "second" do not limit a quantity and an execution order, and the words such as "first" and "second" do not necessarily indicate a difference.

The foregoing embodiments of this application do not constitute a limitation on the protection scope of this application.

## Claims

1. A charging/discharging circuit (100), configured to charge and discharge a battery pack (200), wherein the circuit (100) comprises a processing module, a first charging circuit, a first switch, a second switch, and an impedance, wherein the battery pack (200) comprises a first battery and a second battery, and the first battery and the second battery are connected in parallel by the impedance, the impedance comprises a path cabling impedance and/or a path device impedance; and the first switch and the second switch are separately connected to the processing module, a first port of the first charging circuit, and the battery pack (200);
the first charging circuit is configured to output a voltage by using the first port, the voltage passes through the first switch, the second switch, and the impedance for charging the battery pack (200), and the first switch and the second switch are separately connected to a charging line of at least one battery in the battery pack (200); and
the processing module is configured to obtain a voltage and/or a current of the charging line of each battery in the battery pack (200), and control, based on the voltage and/or the current, the first switch and the second switch to be turned on or turned off, so that batteries in the battery pack (200) are charged equally, wherein charging lines of the batteries in the battery pack (200) comprise a first charging line and a second charging line so that: the first charging line passes through the first switch for charging the battery pack (200), thereby connecting the first battery to the first port through the first switch, and also connecting the second battery to the first port through the impedance and the first switch, and the second charging line passes through the second switch for charging the battery pack (200), thereby connecting the second battery to the first port through the second switch, and also connecting the first battery to the first port through the impedance and the second switch; and
the processing module is further configured to: in a process in which the first charging line charges the battery pack (200), control the first switch to be turned on and the second switch to be turned off, or control the first switch to be turned off and the second switch to be turned on, so that a voltage difference between a charging voltage of the first battery and a charging voltage of the second battery is less than or equal to a first threshold.

2. The circuit (100) according to claim 1, wherein the circuit (100) further comprises a second charging circuit, and the second charging circuit is connected to both the processing module and the battery pack (200);
the processing module is further configured to switch between the first charging circuit and the second charging circuit when detecting that the voltage and/or the current of the charging line of each battery in the battery pack (200) meet/meets a preset condition; and
when the circuit (100) is switched to the second charging circuit, the second charging circuit provides a fast charging service for the battery pack (200).

3. The circuit (100) according to claim 2, wherein the second charging circuit comprises a third switch and a fourth switch, and the third switch and the fourth switch are separately connected to at least one charging line in the battery pack (200); and
the processing module is further configured to: in a process in which the second charging circuit charges the battery pack (200), control the third switch and/or the fourth switch to be turned on or turned off, so that the batteries in the battery pack (200) are charged equally.

4. The circuit (100) according to any one of claims 1 to 3, wherein the circuit (100) further comprises a collection circuit (300), and the collection circuit (300) is connected to both the battery pack (200) and the processing module;
the collection circuit (300) is configured to collect the voltage and/or the current of the charging line of each battery in the battery pack (200), and report the voltage and/or the current to the processing module; and
the processing module is further configured to receive the voltage and/or the current reported by the collection circuit (300).

5. The circuit (100) according to any one of claims 1 to 4, wherein that the processing module is further configured to switch between the first charging circuit and the second charging circuit when detecting that the voltage and/or the current of the charging line of each battery in the battery pack (200) meet/meets a preset condition comprises:
the processing module is further configured to: when detecting that the voltage and/or the current in the battery pack (200) meet/meets a first preset condition, control the first charging circuit to be switched to the second charging circuit, wherein
the first preset condition is that the charging voltage of the first battery reaches a second threshold, and the charging voltage of the second battery reaches the second threshold.

6. The circuit (100) according to claim 5, wherein that the processing module controls the first charging circuit to be switched to the second charging circuit comprises:
controlling, by the processing module, the third switch to be turned on and the fourth switch to be turned on.

7. The circuit (100) according to any one of claims 1 to 4, wherein in a process in which the second charging circuit charges the battery pack (200), the second charging circuit charges the battery pack (200) by using a third charging line and a fourth charging line; and
the processing module is further configured to control the third switch to be turned on and the fourth switch to be turned off, or control the third switch to be turned off and the fourth switch to be turned on, so that the voltage difference between the charging voltage of the first battery and the charging voltage of the second battery is less than or equal to a third threshold.

8. The circuit (100) according to claim 5, wherein that the processing module is further configured to switch between the first charging circuit and the second charging circuit when detecting that the voltage and/or the current of the charging line of each battery in the battery pack (200) meet/meets a preset condition comprises:
the processing module is further configured to: when detecting that the voltage and/or the current in the battery pack (200) meet/meets a second preset condition, control the second charging circuit to be switched to the first charging circuit, wherein
the second preset condition is that the charging voltage of the first battery reaches a fourth threshold, and the charging voltage of the second battery reaches the fourth threshold.

9. The circuit (100) according to claim 8, wherein that the processing module controls the second charging circuit to be switched to the first charging circuit comprises:
controlling, by the processing module, the first switch to be turned on and the second switch to be turned off, or controls both the first switch and the second switch to be turned on.

10. The circuit (100) according to claim 9, wherein
the processing module is further configured to: when detecting that a charging current of at least one of the first charging line or the second charging line reaches a cutoff current of a battery, disconnect a current charging line from the first charging circuit, and stop charging the battery that reaches the cutoff current.

11. The circuit (100) according to claim 10, wherein that the processing module disconnects the current charging circuit from the first charging circuit, and stops charging for the battery that reaches the cutoff current comprises:
controlling, by the processing module, to change a status of the first switch from being turned on to being turned off, and change a status of the second switch from being turned off to being turned on.

12. The circuit (100) according to any one of claims 1 to 11, wherein the circuit (100) further comprises a power circuit, the first charging circuit comprises a second port, and the second port is used to connect to the power circuit; and
the processing module is further configured to: after the battery pack (200) is charged completely, control the second port of the first charging circuit to be connected to the power circuit, so that the battery pack (200) is discharged;
the processing module is further configured to: in a discharging process of the battery pack (200), control the first switch to be turned on and the second switch to be turned off, or control the first switch to be turned off and the second switch to be turned on, so that a voltage difference between a discharging voltage of the first battery and a discharging voltage of the second battery is less than or equal to a fifth threshold; and
the processing module is further configured to: when detecting that the discharging voltage of the first battery reaches a first power-off voltage, and/or the discharging voltage of the second battery reaches a second power-off voltage, disconnect the power circuit from the battery pack (200).

13. An electronic device, wherein the electronic device comprises a charging/discharging circuit (100) and a battery pack (200), and the charging/discharging circuit (100) is configured to charge and discharge the battery pack (200); and
the charging/discharging circuit (100) is the circuit according to any one of claims 1 to 12.

14. The electronic device according to claim 13, wherein the charging/discharging circuit (100) further comprises a power circuit; and
the power circuit is connected to a processing module of the charging/discharging circuit by using a first charging circuit, and is configured to consume power of the battery pack (200), so that the battery pack (200) is discharged.

15. The electronic device according to claim 13 or 14, wherein the charging/discharging circuit (100) further comprises a collection circuit (300);
the collection circuit (300) is configured to collect a voltage and/or a current of a charging line of each battery in the battery pack (200), and report the voltage and/or the current to the processing module.

## Patentansprüche

1. Eine Lade-/Entladeschaltung (100), konfiguriert zum Laden und Entladen eines Batteriepakets (200), wobei die Schaltung (100) ein Verarbeitungsmodul, eine erste Ladeschaltung, einen ersten Schalter, einen zweiten Schalter und einen Widerstand umfasst, wobei das Batteriepaket (200) eine erste Batterie und eine zweite Batterie umfasst, und die erste Batterie und die zweite Batterie parallel durch den Widerstand verbunden sind, der Widerstand umfasst eine Pfadverkabelungsimpedanz und/oder eine Pfadgeräteimpedanz; und der erste Schalter und der zweite Schalter sind separat mit dem Verarbeitungsmodul, einem ersten Anschluss der ersten Ladeschaltung und dem Batteriepaket (200) verbunden;
die erste Ladeschaltung ist konfiguriert, eine Spannung über den ersten Anschluss auszugeben, die Spannung durchläuft den ersten Schalter, den zweiten Schalter und den Widerstand, um das Batteriepaket (200) zu laden, und der erste Schalter und der zweite Schalter sind separat mit einer Ladungsleitung von mindestens einer Batterie im Batteriepaket (200) verbunden; und
das Verarbeitungsmodul ist konfiguriert, eine Spannung und/oder einen Strom der Ladungsleitung jeder Batterie im Batteriepaket (200) zu erfassen und basierend auf der Spannung und/oder dem Strom den ersten Schalter und den zweiten Schalter zu steuern, um ein- oder auszuschalten, sodass die Batterien im Batteriepaket (200) gleichmäßig geladen werden, wobei die Ladungsleitungen der Batterien im Batteriepaket (200) eine erste Ladungsleitung und eine zweite Ladungsleitung umfassen, sodass: die erste Ladungsleitung durch den ersten Schalter verläuft, um das Batteriepaket (200) zu laden, wodurch die erste Batterie über den ersten Schalter mit dem ersten Anschluss verbunden wird und auch die zweite Batterie über den Widerstand und den ersten Schalter mit dem ersten Anschluss verbunden wird, und die zweite Ladungsleitung durch den zweiten Schalter verläuft, um das Batteriepaket (200) zu laden; wodurch die zweite Batterie über den zweiten Schalter mit dem ersten Anschluss verbunden wird und auch die erste Batterie über den Widerstand und den zweiten Schalter mit dem ersten Anschluss verbunden wird; und
das Verarbeitungsmodul ist ferner konfiguriert, in einem Prozess, in dem die erste Ladungsleitung das Batteriepaket (200) lädt, den ersten Schalter einzuschalten und den zweiten Schalter auszuschalten oder den ersten Schalter auszuschalten und den zweiten Schalter einzuschalten, sodass ein Spannungsunterschied zwischen einer Ladespannung der ersten Batterie und einer Ladespannung der zweiten Batterie kleiner oder gleich einem ersten Schwellenwert ist.

2. Die Schaltung (100) gemäß Anspruch 1, wobei die Schaltung (100) ferner eine zweite Ladeschaltung umfasst, und die zweite Ladeschaltung ist sowohl mit dem Verarbeitungsmodul als auch mit dem Batteriepaket (200) verbunden;
Das Verarbeitungsmodul ist ferner konfiguriert, zwischen dem ersten Ladekreis und dem zweiten Ladekreis zu wechseln, wenn erkannt wird, dass die Spannung und/oder der Strom der Ladungsleitung jeder Batterie im Batteriepack (200) eine voreingestellte Bedingung erfüllt; und
Wenn der Schaltkreis (100) auf den zweiten Ladekreis umgeschaltet wird, bietet der zweite Ladekreis einen Schnellladeservice für das Batteriepack (200).

3. Der Schaltkreis (100) gemäß Anspruch 2, wobei der zweite Ladekreis einen dritten Schalter und einen vierten Schalter umfasst, und der dritte Schalter und der vierte Schalter sind separat mit mindestens einer Ladungsleitung im Batteriepack (200) verbunden; und
Das Verarbeitungsmodul ist ferner konfiguriert: In einem Prozess, in dem der zweite Ladekreis das Batteriepack (200) lädt, den dritten Schalter und/oder den vierten Schalter ein- oder auszuschalten, sodass die Batterien im Batteriepack (200) gleichmäßig geladen werden.

4. Der Schaltkreis (100) gemäß einem der Ansprüche 1 bis 3, wobei der Schaltkreis (100) ferner einen Sammelkreis (300) umfasst, und der Sammelkreis (300) ist sowohl mit dem Batteriepack (200) als auch mit dem Verarbeitungsmodul verbunden;
Der Sammelkreis (300) ist konfiguriert, die Spannung und/oder den Strom der Ladungsleitung jeder Batterie im Batteriepack (200) zu sammeln und die Spannung und/oder den Strom an das Verarbeitungsmodul zu melden; und
Das Verarbeitungsmodul ist ferner konfiguriert, die vom Sammelkreis (300) gemeldete Spannung und/oder den Strom zu empfangen.

5. Der Schaltkreis (100) gemäß einem der Ansprüche 1 bis 4, wobei das Verarbeitungsmodul ferner konfiguriert ist, zwischen dem ersten Ladekreis und dem zweiten Ladekreis zu wechseln, wenn erkannt wird, dass die Spannung und/oder der Strom der Ladungsleitung jeder Batterie im Batteriepack (200) eine voreingestellte Bedingung erfüllt, umfasst:
Das Verarbeitungsmodul ist ferner konfiguriert: Wenn erkannt wird, dass die Spannung und/oder der Strom im Batteriepack (200) eine erste voreingestellte Bedingung erfüllt, den ersten Ladekreis zu steuern, um auf den zweiten Ladekreis umzuschalten, wobei
Die erste voreingestellte Bedingung ist, dass die Ladespannung der ersten Batterie einen zweiten Schwellenwert erreicht und die Ladespannung der zweiten Batterie den zweiten Schwellenwert erreicht.

6. Der Schaltkreis (100) gemäß Anspruch 5, wobei das Verarbeitungsmodul den ersten Ladekreis steuert, um auf den zweiten Ladekreis umzuschalten, umfasst:
Das Verarbeitungsmodul steuert den dritten Schalter, um eingeschaltet zu werden, und den vierten Schalter, um eingeschaltet zu werden.

7. Die Schaltung (100) gemäß einem der Ansprüche 1 bis 4, wobei in einem Prozess, in dem die zweite Ladeschaltung das Batteriepaket (200) lädt, die zweite Ladeschaltung das Batteriepaket (200) unter Verwendung einer dritten und einer vierten Ladungsleitung lädt; und
das Verarbeitungsmodul ist ferner konfiguriert, den dritten Schalter einzuschalten und den vierten Schalter auszuschalten oder den dritten Schalter auszuschalten und den vierten Schalter einzuschalten, sodass der Spannungsunterschied zwischen der Ladespannung der ersten Batterie und der Ladespannung der zweiten Batterie kleiner oder gleich einem dritten Schwellenwert ist.

8. Die Schaltung (100) gemäß Anspruch 5, wobei das Verarbeitungsmodul ferner konfiguriert ist, zwischen der ersten Ladeschaltung und der zweiten Ladeschaltung zu wechseln, wenn festgestellt wird, dass die Spannung und/oder der Strom der Ladungsleitung jeder Batterie im Batteriepaket (200) eine vorgegebene Bedingung erfüllt/erfüllen, umfasst:
das Verarbeitungsmodul ist ferner konfiguriert: Wenn festgestellt wird, dass die Spannung und/oder der Strom im Batteriepaket (200) eine zweite vorgegebene Bedingung erfüllt/erfüllen, die zweite Ladeschaltung zur ersten Ladeschaltung zu wechseln, wobei
die zweite vorgegebene Bedingung ist, dass die Ladespannung der ersten Batterie einen vierten Schwellenwert erreicht und die Ladespannung der zweiten Batterie den vierten Schwellenwert erreicht.

9. Die Schaltung (100) gemäß Anspruch 8, wobei das Verarbeitungsmodul die zweite Ladeschaltung zur ersten Ladeschaltung wechselt, umfasst:
das Verarbeitungsmodul steuert, dass der erste Schalter eingeschaltet und der zweite Schalter ausgeschaltet wird, oder steuert, dass sowohl der erste Schalter als auch der zweite Schalter eingeschaltet werden.

10. Die Schaltung (100) gemäß Anspruch 9, wobei
das Verarbeitungsmodul ferner konfiguriert ist: Wenn festgestellt wird, dass ein Ladestrom von mindestens einer der ersten oder der zweiten Ladungsleitung einen Abschaltstrom einer Batterie erreicht, eine aktuelle Ladungsleitung von der ersten Ladeschaltung zu trennen und das Laden der Batterie, die den Abschaltstrom erreicht, zu stoppen.

11. Die Schaltung (100) gemäß Anspruch 10, wobei das Verarbeitungsmodul die aktuelle Ladeschaltung von der ersten Ladeschaltung trennt und das Laden der Batterie, die den Abschaltstrom erreicht, stoppt, umfasst:
das Verarbeitungsmodul steuert, den Status des ersten Schalters von eingeschaltet auf ausgeschaltet zu ändern und den Status des zweiten Schalters von ausgeschaltet auf eingeschaltet zu ändern.

12. Die Schaltung (100) gemäß einem der Ansprüche 1 bis 11, wobei die Schaltung (100) ferner eine Stromversorgungsschaltung umfasst, die erste Ladeschaltung einen zweiten Anschluss umfasst und der zweite Anschluss zur Verbindung mit der Stromversorgungsschaltung verwendet wird; und
das Verarbeitungsmodul ist ferner konfiguriert, nach vollständigem Aufladen des Batteriepakets (200) den zweiten Anschluss der ersten Ladeschaltung mit der Stromversorgungsschaltung zu verbinden, sodass das Batteriepaket (200) entladen wird;
das Verarbeitungsmodul ist ferner konfiguriert, während eines Entladevorgangs des Batteriepakets (200) den ersten Schalter einzuschalten und den zweiten Schalter auszuschalten oder den ersten Schalter auszuschalten und den zweiten Schalter einzuschalten, sodass der Spannungsunterschied zwischen einer Entladespannung der ersten Batterie und einer Entladespannung der zweiten Batterie kleiner oder gleich einem fünften Schwellenwert ist; und
das Verarbeitungsmodul ist ferner konfiguriert, beim Erkennen, dass die Entladespannung der ersten Batterie eine erste Abschaltspannung erreicht und/oder die Entladespannung der zweiten Batterie eine zweite Abschaltspannung erreicht, die Stromversorgungsschaltung vom Batteriepaket (200) zu trennen.

13. Ein elektronisches Gerät, wobei das elektronische Gerät eine Lade-/Entladeschaltung (100) und ein Batteriepaket (200) umfasst und die Lade-/Entladeschaltung (100) konfiguriert ist, das Batteriepaket (200) zu laden und zu entladen; und
die Lade-/Entladeschaltung (100) ist die Schaltung gemäß einem der Ansprüche 1 bis 12.

14. Das elektronische Gerät gemäß Anspruch 13, wobei die Lade-/Entladeschaltung (100) ferner eine Stromversorgungsschaltung umfasst; und
die Stromversorgungsschaltung ist mit einem Verarbeitungsmodul der Lade-/Entladeschaltung über eine erste Ladeschaltung verbunden und ist konfiguriert, Energie des Batteriepakets (200) zu verbrauchen, sodass das Batteriepaket (200) entladen wird.

15. Das elektronische Gerät gemäß Anspruch 13 oder 14, wobei die Lade-/Entladeschaltung (100) ferner eine Sammelschaltung (300) umfasst; und
die Sammelschaltung (300) ist konfiguriert, eine Spannung und/oder einen Strom einer Ladungsleitung jeder Batterie im Batteriepaket (200) zu erfassen und die Spannung und/oder den Strom an das Verarbeitungsmodul zu melden.

## Revendications

1. Un circuit de charge/décharge (100), configuré pour charger et décharger un pack de batteries (200), dans lequel le circuit (100) comprend un module de traitement, un premier circuit de charge, un premier interrupteur, un second interrupteur et une impédance, dans lequel le pack de batteries (200) comprend une première batterie et une seconde batterie, et la première batterie et la seconde batterie sont connectées en parallèle par l'impédance, l'impédance comprend une impédance de câblage de chemin et/ou une impédance de dispositif de chemin ; et le premier interrupteur et le second interrupteur sont connectés séparément au module de traitement, à un premier port du premier circuit de charge et au pack de batteries (200) ;
le premier circuit de charge est configuré pour fournir une tension en utilisant le premier port, la tension passe par le premier interrupteur, le second interrupteur et l'impédance pour charger le pack de batteries (200), et le premier interrupteur et le second interrupteur sont connectés séparément à une ligne de charge d'au moins une batterie dans le pack de batteries (200) ; et
le module de traitement est configuré pour obtenir une tension et/ou un courant de la ligne de charge de chaque batterie dans le pack de batteries (200), et contrôler, en fonction de la tension et/ou du courant, le premier interrupteur et le second interrupteur pour être activés ou désactivés, de sorte que les batteries dans le pack de batteries (200) soient chargées de manière égale, dans lequel les lignes de charge des batteries dans le pack de batteries (200) comprennent une première ligne de charge et une seconde ligne de charge de sorte que : la première ligne de charge passe par le premier interrupteur pour charger le pack de batteries (200), connectant ainsi la première batterie au premier port par le premier interrupteur, et connectant également la seconde batterie au premier port par l'impédance et le premier interrupteur, et la seconde ligne de charge passe par le second interrupteur pour charger le pack de batteries (200) ; connectant ainsi la seconde batterie au premier port par le second interrupteur, et connectant également la première batterie au premier port par l'impédance et le second interrupteur ; et
le module de traitement est en outre configuré pour : dans un processus dans lequel la première ligne de charge charge le pack de batteries (200), contrôler le premier interrupteur pour qu'il soit activé et le second interrupteur pour qu'il soit désactivé, ou contrôler le premier interrupteur pour qu'il soit désactivé et le second interrupteur pour qu'il soit activé, de sorte qu'une différence de tension entre une tension de charge de la première batterie et une tension de charge de la seconde batterie soit inférieure ou égale à un premier seuil.

2. Le circuit (100) selon la revendication 1, dans lequel le circuit (100) comprend en outre un second circuit de charge, et le second circuit de charge est connecté à la fois au module de traitement et au pack de batteries (200) ;
le module de traitement est en outre configuré pour basculer entre le premier circuit de charge et le deuxième circuit de charge lorsqu'il détecte que la tension et/ou le courant de la ligne de charge de chaque batterie dans le pack de batteries (200) répond/répondent à une condition prédéfinie ; et
lorsque le circuit (100) est basculé vers le deuxième circuit de charge, ce dernier fournit un service de charge rapide pour le pack de batteries (200).

3. Le circuit (100) selon la revendication 2, dans lequel le deuxième circuit de charge comprend un troisième interrupteur et un quatrième interrupteur, et le troisième interrupteur et le quatrième interrupteur sont connectés séparément à au moins une ligne de charge dans le pack de batteries (200) ; et
le module de traitement est en outre configuré pour : dans un processus où le deuxième circuit de charge charge le pack de batteries (200), contrôler le troisième interrupteur et/ou le quatrième interrupteur pour qu'ils soient activés ou désactivés, de sorte que les batteries dans le pack de batteries (200) soient chargées de manière égale.

4. Le circuit (100) selon l'une quelconque des revendications 1 à 3, dans lequel le circuit (100) comprend en outre un circuit de collecte (300), et le circuit de collecte (300) est connecté à la fois au pack de batteries (200) et au module de traitement ;
le circuit de collecte (300) est configuré pour collecter la tension et/ou le courant de la ligne de charge de chaque batterie dans le pack de batteries (200), et rapporter la tension et/ou le courant au module de traitement ; et
le module de traitement est en outre configuré pour recevoir la tension et/ou le courant rapporté par le circuit de collecte (300).

5. Le circuit (100) selon l'une quelconque des revendications 1 à 4, dans lequel le module de traitement est en outre configuré pour basculer entre le premier circuit de charge et le deuxième circuit de charge lorsqu'il détecte que la tension et/ou le courant de la ligne de charge de chaque batterie dans le pack de batteries (200) répond/répondent à une condition prédéfinie, ce qui comprend :
le module de traitement est en outre configuré pour : lorsqu'il détecte que la tension et/ou le courant dans le pack de batteries (200) répond/répondent à une première condition prédéfinie, contrôler le premier circuit de charge pour qu'il soit basculé vers le deuxième circuit de charge, dans lequel
la première condition prédéfinie est que la tension de charge de la première batterie atteigne un deuxième seuil, et que la tension de charge de la deuxième batterie atteigne le deuxième seuil.

6. Le circuit (100) selon la revendication 5, dans lequel le fait que le module de traitement contrôle le premier circuit de charge pour qu'il soit basculé vers le deuxième circuit de charge comprend :
contrôler, par le module de traitement, le troisième interrupteur pour qu'il soit activé et le quatrième interrupteur pour qu'il soit activé.

7. Le circuit (100) selon l'une quelconque des revendications 1 à 4, dans lequel, dans un processus où le deuxième circuit de charge charge le pack de batteries (200), le deuxième circuit de charge charge le pack de batteries (200) en utilisant une troisième ligne de charge et une quatrième ligne de charge ; et
le module de traitement est en outre configuré pour contrôler le troisième interrupteur pour qu'il soit activé et le quatrième interrupteur pour qu'il soit désactivé, ou pour contrôler le troisième interrupteur pour qu'il soit désactivé et le quatrième interrupteur pour qu'il soit activé, de sorte que la différence de tension entre la tension de charge de la première batterie et la tension de charge de la deuxième batterie soit inférieure ou égale à un troisième seuil.

8. Le circuit (100) selon la revendication 5, dans lequel le module de traitement est en outre configuré pour basculer entre le premier circuit de charge et le deuxième circuit de charge lorsqu'il détecte que la tension et/ou le courant de la ligne de charge de chaque batterie dans le pack de batteries (200) répond/répondent à une condition prédéfinie, comprend :
le module de traitement est en outre configuré pour : lorsqu'il détecte que la tension et/ou le courant dans le pack de batteries (200) répond/répondent à une deuxième condition prédéfinie, contrôler le deuxième circuit de charge pour qu'il soit basculé vers le premier circuit de charge, dans lequel
la deuxième condition prédéfinie est que la tension de charge de la première batterie atteint un quatrième seuil, et que la tension de charge de la deuxième batterie atteint le quatrième seuil.

9. Le circuit (100) selon la revendication 8, dans lequel le module de traitement contrôle le deuxième circuit de charge pour qu'il soit basculé vers le premier circuit de charge, comprend :
contrôler, par le module de traitement, le premier interrupteur pour qu'il soit activé et le deuxième interrupteur pour qu'il soit désactivé, ou contrôler à la fois le premier interrupteur et le deuxième interrupteur pour qu'ils soient activés.

10. Le circuit (100) selon la revendication 9, dans lequel
le module de traitement est en outre configuré pour : lorsqu'il détecte qu'un courant de charge d'au moins l'une des première ligne de charge ou deuxième ligne de charge atteint un courant de coupure d'une batterie, déconnecter une ligne de charge actuelle du premier circuit de charge, et arrêter de charger la batterie qui atteint le courant de coupure.

11. Le circuit (100) selon la revendication 10, dans lequel le module de traitement déconnecte le circuit de charge actuel du premier circuit de charge, et arrête de charger la batterie qui atteint le courant de coupure, comprend :
contrôler, par le module de traitement, pour changer l'état du premier interrupteur de activé à désactivé, et changer l'état du deuxième interrupteur de désactivé à activé.

12. Le circuit (100) selon l'une quelconque des revendications 1 à 11, dans lequel le circuit (100) comprend en outre un circuit d'alimentation, le premier circuit de charge comprend un deuxième port, et le deuxième port est utilisé pour se connecter au circuit d'alimentation ; et
le module de traitement est en outre configuré pour : après que le bloc-batterie (200) est complètement chargé, contrôler le deuxième port du premier circuit de charge pour qu'il soit connecté au circuit d'alimentation, de sorte que le bloc-batterie (200) soit déchargé ;
le module de traitement est en outre configuré pour : lors d'un processus de décharge du bloc-batterie (200), contrôler le premier interrupteur pour qu'il soit activé et le deuxième interrupteur pour qu'il soit désactivé, ou contrôler le premier interrupteur pour qu'il soit désactivé et le deuxième interrupteur pour qu'il soit activé, de sorte qu'une différence de tension entre une tension de décharge de la première batterie et une tension de décharge de la deuxième batterie soit inférieure ou égale à un cinquième seuil ; et
le module de traitement est en outre configuré pour : lorsqu'il détecte que la tension de décharge de la première batterie atteint une première tension d'arrêt, et/ou que la tension de décharge de la deuxième batterie atteint une deuxième tension d'arrêt, déconnecter le circuit d'alimentation du bloc-batterie (200).

13. Un dispositif électronique, dans lequel le dispositif électronique comprend un circuit de charge/décharge (100) et un bloc-batterie (200), et le circuit de charge/décharge (100) est configuré pour charger et décharger le bloc-batterie (200) ; et
le circuit de charge/décharge (100) est le circuit selon l'une quelconque des revendications 1 à 12.

14. Le dispositif électronique selon la revendication 13, dans lequel le circuit de charge/décharge (100) comprend en outre un circuit d'alimentation ; et
le circuit d'alimentation est connecté à un module de traitement du circuit de charge/décharge à l'aide d'un premier circuit de charge, et est configuré pour consommer l'énergie du bloc-batterie (200), de sorte que le bloc-batterie (200) soit déchargé.

15. Le dispositif électronique selon la revendication 13 ou 14, dans lequel le circuit de charge/décharge (100) comprend en outre un circuit de collecte (300) ; et
le circuit de collecte (300) est configuré pour collecter une tension et/ou un courant d'une ligne de charge de chaque batterie dans le bloc-batterie (200), et rapporter la tension et/ou le courant au module de traitement.
